# EUROPÄISCHE PATENTSCHRIFT

(11) **EP 3 347 765 B1**
(45) Veröffentlichungstag und Bekanntmachung des Hinweises auf die Patenterteilung: **17.07.2019**
(21) Anmeldenummer: 16804733.0
(22) Anmeldetag: 24.11.2016
(51) Int. Cl.: G02F 1/13357, G02F 1/13

(54) **BILDSCHIRM MIT BETRIEBSARTEN FUER EINE FREIE UND EINE EINGESCHRAENKTE SICHT**
DISPLAY SCREEN WITH OPERATIONAL MODES FOR A FREE AND A RESTRICTED VIEW
ÉCRAN AVEC DES MODES D'OPÉRATION POUR UNE VUE SANS RESTRICTION ET UNE VUE RESTRAINTE

(30) Priorität: 27.11.2015 DE 102015015516; 22.03.2016 DE 102016003627; 04.05.2016 DE 102016005626; 20.06.2016 DE 102016007814
(43) Veröffentlichungstag der Anmeldung: 18.07.2018
(60) Teilanmeldung: 19178797.7
(73) Patentinhaber: siOPTICA GmbH, 07745 Jena (DE)
(72) Erfinder: ALKHIMENKO, Stepan, 07743 Jena (DE); KLIPPSTEIN, Markus, 07751 Jena (DE); NARI, Ambrose Peter, 07745 Jena (DE); SCHROETER, Uwe, 07774 Dornburg-Camburg (DE); SCHWARZ, Juergen, 99510 Apolda (DE)
(74) Vertreter: Patentanwälte Geyer, Fehners & Partner mbB
(86) Internationale Anmeldenummer: PCT/EP2016/078711
(87) Internationale Veröffentlichungsnummer: WO 2017/089482

(56) Entgegenhaltungen:
- WO-A1-2015/121398
- DE-A1-102014 003 298
- US-A1- 2010 177 533

## Beschreibung

### Gebiet der Erfindung

In den letzten Jahren wurden große Fortschritte zur Verbreiterung des Sehwinkels bei LCDs erzielt. Allerdings gibt es oft Situationen, in denen dieser sehr große Sehbereich eines Bildschirms von Nachteil sein kann. Zunehmend werden auch Informationen auf mobilen Geräten wie Notebooks und Tablet-PCs verfügbar, wie Bankdaten oder andere, persönliche Angaben, und sensible Daten. Dem entsprechend brauchen die Menschen eine Kontrolle darüber, wer diese sensiblen Daten sehen darf; sie müssen wählen können zwischen einem weiten Betrachtungswinkel, um Informationen auf ihrem Display mit anderen zu teilen, z.B. beim Betrachten von Urlaubsfotos oder auch für Werbezwecke. Andererseits benötigen sie einen kleinen Betrachtungswinkel, wenn sie die Bildinformationen vertraulich behandeln wollen.

### Stand der Technik

Zusatzfolien, die auf Mikro-Lamellen basieren, wurden bereits für mobile Displays eingesetzt, um deren optischen Datenschutz - einen sogenannten Privacy-Modus - zu erreichen. Allerdings waren diese Folien nicht (um)schaltbar, sie mussten immer erst per Hand aufgelegt und danach wieder entfernt werden. Auch muss man sie separat zum Display transportieren, wenn man sie nicht gerade braucht. Ein wesentlicher Nachteil des Einsatzes solcher Lamellen-Folien ist ferner mit den einhergehenden Lichtverlusten verbunden.

Die US 6,765,550 beschreibt einen solchen Sichtschutz durch Mikro-Lamellen. Größter Nachteil ist hier die mechanische Entfernung bzw. der mechanische Anbau des Filters sowie der Lichtverlust im geschützten Modus.

In der US 5,993,940 wird der Einsatz einer Folie beschrieben, die auf ihrer Oberfläche gleichmäßig angeordnete, kleine Prismenstreifen hat, um einen Privacy-Modus zu erzielen. Entwicklung und Herstellung sind recht aufwändig.

In der WO 2012/033583 wird die Umschaltung zwischen freier und eingeschränkter Sicht vermittels der Ansteuerung von Flüssigkristallen zwischen sogenannten "chromonischen" Schichten erzeugt. Hierbei entsteht ein Lichtverlust und der Aufwand ist recht hoch.

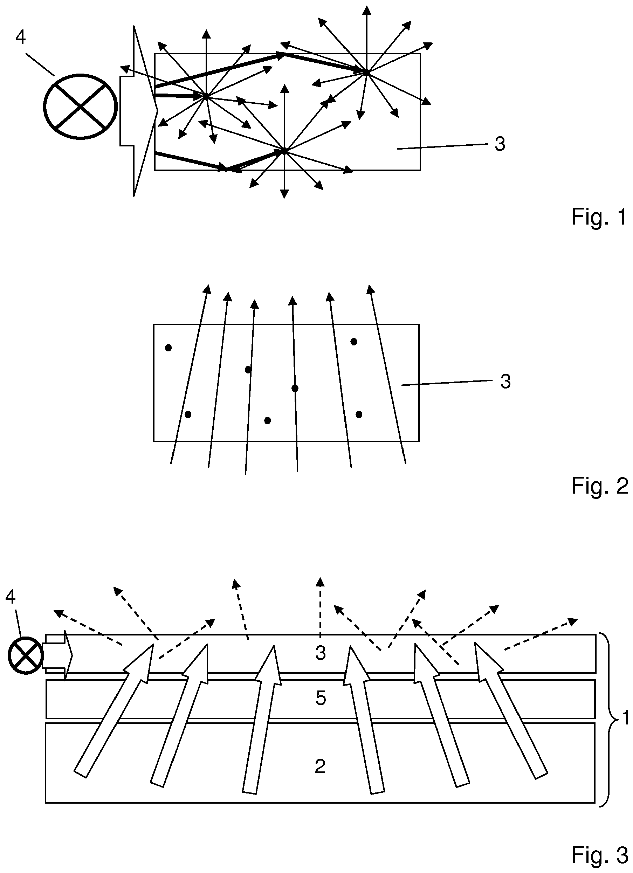

Die Schrift US 2009/0067156 offenbart eine Vielzahl an Ideen, um ein Beleuchtungssystem und ein Bildschirmgerät auszugestalten. Die dort in den Figuren 3A und 3B abgebildete Variante verwendet insbesondere zwei Hintergrundbeleuchtungen, sogenannte Backlights, bestehend aus keilförmigen Lichtleitern, und ein LCD-Panel, wobei das hintere Backlight 40 zwingend einen weiten Beleuchtungswinkel und das vordere Backlight 38 zwingend einen schmalen Beleuchtungswinkel erzeugen soll. Unklar bleibt hierbei jedoch die Funktionsweise, wie das Backlight 38 einen schmalen Beleuchtungswinkel erzeugen soll, ohne dass das Licht mit einem weiten Beleuchtungswinkel, welches vom Backlight 40 herrührt, beim Durchgang durch das Backlight 38 wesentlich in Licht mit einem schmalen Beleuchtungswinkel umgewandelt wird.

Zur Ausgestaltung nach Fig.5 der US 2009/0067156 ist zu bemerken, dass beide Lichtleiter 46 und 48 jeweils "narrow light", also Licht mit einem schmalen Beleuchtungswinkel, produzieren. Das Licht des Lichtleiters 48 wird erst durch einen aufwendig mit Prismenstrukturen zu erstellenden Teilspiegel 50 in "wide light", also Licht mit einem weiten Beleuchtungswinkel, umgewandelt. Diese Umwandlung beschneidet die Lichtintensität extrem, da das zunächst in einen schmalen Beleuchtungswinkel abgestrahlte Licht, welches als einziges Licht zur Verfügung steht, dann in einen großen Beleuchtungswinkel, i.d.R. den Halbraum, aufgefächert wird. Dies hat zur Folge, dass je nach Parametern die Helligkeit - bezogen auf die Leuchtdichte - um einen Faktor 5 oder mehr verringert wird. Es handelt sich also um eine praktisch wenig relevante Ausgestaltung.

In der Ausgestaltung nach Fig.7 der US 2009/0067156 ist zwingend eine Phosphorschicht notwendig, diese soll UV-Licht in sichtbares Licht umwandeln. Dieser Aufwand ist groß und bei dem Wunsch nach hinreichend Licht aus dem Backlight, um ein LCD-Panel lesbar zu beleuchten, werden sehr große Intensitäten an UV-Licht benötigt. Mithin ist dies teuer, aufwändig und schon von der Abschirmung der benötigten UV-Strahlung her nicht praktikabel.

Die US 2012/0235891 beschreibt ein sehr aufwändiges Backlight in einem Bildschirm. Dort kommen gemäß Fig.1 und 15 nicht nur mehrere Lichtleiter zum Einsatz, sondern auch weitere komplexe optische Elemente wie etwa Mikrolinsenelemente 40 und Prismenstrukturen 50, die das Licht von der hinteren Beleuchtung auf dem Weg zur vorderen Beleuchtung umformen. Dies ist teuer und aufwändig umzusetzen und ebenso mit Lichtverlust verbunden. Gemäß der Variante nach Fig.17 in der US 2012/0235891 produzieren beide Lichtquellen 4R und 18 Licht mit einem schmalen Beleuchtungswinkel, wobei das Licht von der hinteren Lichtquelle 18 erst aufwändig in Licht mit einem großen Beleuchtungswinkel, umgewandelt wird. Diese komplexe Umwandlung ist - wie weiter oben schon bemerkt - stark helligkeitsmindernd.

Gemäß der JP 2007-155783 werden spezielle, aufwendig zu berechnende und herzustellende optische Oberflächen 19 genutzt, die dann Licht je nach Lichteinfallswinkel in verschiedene schmale oder breite Bereiche ablenken. Diese Strukturen ähneln Fresnel-Linsen. Ferner sind Störflanken vorhanden, die Licht in unerwünschte Richtungen ablenken. Somit bleibt unklar, ob wirklich sinnvolle Lichtverteilungen erreicht werden können.

Nach Lehre der GB 2428128 A werden zur Erzielung einer eingeschränkten Sicht zusätzliche, vom Bildschirm deutlich entfernte Lichtquellen, die ein auf dem Bildschirm angebrachtes Hologramm beleuchten, verwendet, um den Seiteneinblick mit speziellen Wellenlängen zu überlagern. Nachteilig sind hierbei der benötigte Abstand der Lichtquellen vom Bildschirm und der Aufwand, entsprechende Hologramme herzustellen.

In der US 2013/0308185 wird ein spezieller, mit Stufen ausgebildeter Lichtleiter beschrieben, der Licht auf einer Großfläche in verschiedene Richtungen abstrahlt, je nachdem, aus welcher Richtung er von einer Schmalseite aus beleuchtet wird. Im Zusammenspiel mit einem transmissiven Bildgeber, z.B. einem LC-Display, kann somit ein zwischen freiem und eingeschränktem Sichtmodus schaltbarer Bildschirm erzeugt werden. Nachteilig ist hierbei u.a., dass der eingeschränkte Sichteffekt entweder nur für links/rechts oder aber für oben/unten, nicht aber für links/rechts/oben/unten gleichzeitig erzeugt werden kann, wie es etwa für bestimmte Zahlungsvorgänge nötig ist. Hinzu kommt, dass auch im eingeschränkten Sichtmodus aus blockierten Einsichtwinkeln immer noch ein Restlicht sichtbar ist.

In der US 2010/0177533 A1 wird ein plattenförmiger Lichtleiter beschrieben, in den seitlich Licht eingekoppelt wird und sich mittels Totalreflexion ausbreitet. An seiner - von einem Betrachter aus gesehenen - Rückseite sind eine Vielzahl von Auskoppelstrukturen ausgebildet; auf diese unter bestimmten Winkel auf diese Auskoppelstrukturen treffendes, seitlich in den Lichtleiter eingestrahltes Licht wird nach vorne in Richtung eines Betrachters gelenkt und tritt aus dem Lichtleiter aus

Schließlich beschreibt die DE 10 2014 003 298 A1 Verfahren und Anordnung zur wahlweisen Einschränkung der Erkennbarkeit von Bildern. Hierzu ist ein spezielles optisches Element nötig ist, welches für das von dem Bildschirm ausgehende Licht zu mindestens 70% transparent ist, und welches für aus Leuchtmitteln seitlich einfallendes Licht in einen eingeschränkten Winkelbereich derart ablenkt, dass in Richtungen, die in Winkeln α größer als γ, mit γ > 20°, zur Flächennormale des Bildschirms gelegen sind, das von dem Bildschirm ausgehende Licht mit dem von dem optischen Element umgelenkten Licht überlagert wird, wodurch im Wesentlichen das auf dem Bildschirm dargestellte Bild nur aus Winkeln β < γ zur Flächennormale des Bildschirms uneingeschränkt sichtbar ist.

Den vorgenannten Verfahren und Anordnungen ist in der Regel der Nachteil gemein, dass sie die Helligkeit des Grundbildschirms deutlich reduzieren und/oder ein aktives, zumindest jedoch ein spezielles, optisches Element zur Modi-Umschaltung benötigen und/oder eine aufwändige sowie teure Herstellung erfordern und/oder die Auflösung im frei betrachtbaren Modus reduzieren.

### Beschreibung der Erfindung

Es ist daher Aufgabe der Erfindung, einen Bildschirm zu beschreiben, durch den eine sichere Darstellung von Informationen durch einen wahlweise eingeschränkten Betrachtungswinkel realisiert werden kann, wobei in einer zweiten bzw. weiteren Betriebsart eine freie, möglichst im Betrachtungswinkel uneingeschränkte Sicht möglich sein soll. Die Erfindung soll mit einfachen Mitteln möglichst preisgünstig umsetzbar sein. In beiden Betriebsarten soll eine möglichst hohe Auflösung, besonders bevorzugt die native Auflösung des verwendeten Bildschirms, sichtbar sein. Ferner soll nur ein möglichst geringer Lichtverlust durch die Lösung eingeführt werden.

Diese Aufgabe wird erfindungsgemäß gelöst von einem Bildschirm, der in mindestens zwei Betriebsarten B1 für einen freien Sichtmodus und B2 für einen eingeschränkten Sichtmodus betrieben werden kann. Ein solcher Bildschirm umfasst zunächst eine flächenartig ausgedehnte Hintergrundbeleuchtung, die in der Betriebsart B1 für einen freien Sichtmodus Licht in einen nicht eingeschränkten Winkelbereich abstrahlt, und die in der Betriebsart B2 für einen eingeschränkten Sichtmodus Licht in einen eingeschränkten Winkelbereich abstrahlt, sowie einen in Betrachtungsrichtung vor der Hintergrundbeleuchtung angeordneten transmissiven Bildgeber. Dieser kann beispielsweise als LCD-Panel oder anderer durchscheinender Lichtmodulator ausgestaltetet sein. Es handelt sich dabei um eine Einrichtung, die zur Bildwiedergabe ausgelegt ist, anstelle des Begriffs des Bildgebers wird synonym auch der Begriff der Bildwiedergabeeinheit verwendet.

In einer ersten Ausgestaltung umfasst der Bildschirm Leuchtmittel, die in Betrachtungsrichtung außerhalb des aktiven Bildwiedergabebereichs des Bildgebers und gleichzeitig in einem Abstand von mindestens einem Millimeter oberhalb des Bildgebers angeordnet sind. Die Leuchtmittel, können auch in einem Abstand von zwei, drei, vier, fünf, oder sechs Millimetern oder noch höher oberhalb der Bildwiedergabeeinheit angeordnet sein.

In einer alternativen oder die vorgenannte ergänzenden zweiten Ausgestaltung umfasst der Bildschirm einen in Betrachtungsrichtung vor dem Bildgeber gelegenen - d.h. mit oder ohne Abstand, z.B. 0 mm, 1 mm, 2 mm, 5 mm, 8 mm oder 10 mm Abstand zum transmissiven Bildgeber - plattenförmigen Lichtleiter, welcher aus einem transparenten, thermoplastischen oder thermoelastischen Kunststoff und darin verteilten Streupartikeln besteht, wobei in diesem Fall seitlich an den Schmalseiten des Lichtleiters Leuchtmittel angeordnet sind. In Ergänzung oder alternativ zu den Streupartikeln kann der plattenförmige Lichtleiter auch an mindestens einer der beiden Großflächen Auskoppelelemente aufweisen. Diese können nachträglich darauf angebracht oder bereits bei der Herstellung daran ausgebildet werden. Es kann sich beispielsweise um holographische Strukturen oder eingeätzte Strukturen handeln.

Wird der plattenförmige Lichtleiter ergänzend zu der ersten Ausgestaltung verwendet, bei der die Leuchtmittel mindestens einen Millimeter oberhalb des Bildgebers angeordnet sind, so ist auch der Lichtleiter in einem Abstand von mindestens einem Millimeter oberhalb des Bildgebers angeordnet. Der Lichtleiter kann auch in einem größeren Abstand als 1 mm oberhalb der Bildwiedergabeeinheit angeordnet sein, z.B. in einem Abstand von 2, 3, 4, 5 oder 6 mm.

In der Betriebsart B1 sind hier die Leuchtmittel ausgeschaltet, so dass das von der Hintergrundbeleuchtung ausgehende und anschließend durch den transmissiven Bildgeber hindurchdringende Licht im Wesentlichen unbeeinflusst von den Leuchtmitteln bleibt bzw. - bei Vorhandensein eines Lichtleiters - im Wesentlichen unbeeinflusst durch den Lichtleiter hindurchtritt.

In der Betriebsart B2 sind die Leuchtmittel eingeschaltet, so dass das von der Hintergrundbeleuchtung in einen eingeschränkten Winkelbereich abgestrahlte und sodann durch den transmissiven Bildgeber hindurchdringende Licht von Licht überlagert wird, welches - ohne Verwendung eines Lichtleiters-der Bildgeber aufgrund der Einstrahlung von Licht aus den Leuchtmitteln diffus und/oder gerichtet in den Betrachtungsraum zurückstreut bzw. -reflektiert, bzw. welches - bei Vorhandensein eines Lichtleiters - aufgrund der Einstrahlung von Licht aus dem Lichtleiter (3) diffus und/oder gerichtet in den Betrachtungsraum zurückstreut bzw. zurückreflektiert wird und/oder von diesem flächig über einen großen Winkelbereich in den Betrachtungsraum abgestrahlt wird. "Groß" bezeichnet dabei einen Winkelbereich von mindestens 120° oder mehr, bis nahezu zum Halbraum vor dem Lichtleiter.

Insgesamt wird dadurch die Restsichtbarkeit eines auf dem transmissiven Bildgeber dargestellten Bildes außerhalb des besagten eingeschränkten Winkelbereiches deutlich verringert oder sogar vollständig abgestellt.

In der Betriebsart B2 ist das aus schrägen, durch die Winkeleinschränkung geblockten Sichtrichtungen wahrnehmbare Bild je nach Ausgestaltung der Leuchtmittel eine graue oder weiße Fläche, in der Regel jedoch nicht eine schwarze Fläche, da ja das Licht, welches der Lichtleiter aussendet, selbst einen schwarzen Bildinhalt sichtbar überstrahlt.

Die flächenartig ausgedehnte Hintergrundbeleuchtung kann beispielsweise ausgebildet sein, wie in den Schriften WO 2015/121398 oder auch der US 2013/0308185 vorgeschlagen. Andere Ausgestaltungen sind selbstverständlich möglich. Eine solche flächenartig ausgedehnte Hintergrundbeleuchtung strahlt in den meisten im Stand der Technik bekannten Ausgestaltungen in der Betriebsart B2 für einen eingeschränkten Sichtmodus Licht zwar in einen eingeschränkten Winkelbereich ab, jedoch ist diese Richtungsselektion bei weitem nicht vollständig, was dazu führt, dass man auf einem transmissiven Bildgeber vor einer solchen Hintergrundbeleuchtung selbst aus Schrägsicht immer noch den Bildinhalt vollständig oder zu großen Teilen erkennen kann, wenn auch mit schwacher Helligkeit und/oder mit schwachem Hell-Dunkel-Kontrast. Diese immer noch mögliche Schrägsicht wird durch die Erfindung vollständig oder nahezu vollständig eliminiert: Durch die Überlagerung des von der Hintergrundbeleuchtung in einen eingeschränkten Winkelbereich abgestrahlten und sodann durch den transmissiven Bildgeber hindurchdringenden Lichts mit Licht, welches der Lichtleiter flächig über einen großen Winkelbereich abstrahlt, wird die Restsichtbarkeit eines auf dem transmissiven Bildgeber dargestellten Bildes außerhalb des eingeschränkten Winkelbereiches massiv verringert, oftmals sogar komplett abgestellt. Die besagte Restsichtbarkeit hat unter anderem damit zu tun, dass viele LCD-Panels eine Volumenstreuung und/oder eine streuende Antiglare-Oberfläche aufweisen, die das von hinten eintreffende, in eingeschränkte Raumwinkel gerichtete Licht teilweise streuen, wodurch auch unter schrägen Winkeln eine Restsichtbarkeit gegeben ist.

Der plattenförmige Lichtleiter weist in der Regel einen Haze-Wert von weniger 10%, bevorzugt von weniger als 4% auf, gemessen gemäß ASTM D1003 auf. Ferner kommen als Streupartikel insbesondere Titandioxidpartikel in Frage. Andere Ausgestaltungen sind jedoch möglich, etwa Lichtleiter mit Partikeln aus Bariumsulfat, mit silsesquioxanen Partikeln oder mit vernetzten Polystyrol-Partikeln oder noch anderen Arten von Partikeln. Die Streupartikel sind in der Regel homogen verteilt, wodurch der Lichtleiter keine inhomogene optische Struktur aufweist. Ferner weist der plattenförmige Lichtleiter mindestens zwei einander gegenüberliegende Großflächen auf, die parallel oder geneigt zueinander angeordnet sind. Eine keilförmige Struktur ist auch möglich, wenngleich parallele Großflächen von Vorteil sind. Sinnvolle Dicken des Lichtleiters liegen typischerweise zwischen 0,5 mm und 4 mm, einschließlich der Bereichsgrenzen. Andere Dicken können fallbedingt auch sinnvoll sein.

In einer vorteilhaften Ausgestaltung besteht die Hintergrundbeleuchtung aus einem flächigen Strahler, der vorzugsweise als Lichtleiter mit seitlich angeordneten Leuchtmitteln ausgebildet ist, mindestens einem in den flächigen Strahler integrierten und/oder davor angeordneten Lichtkollimator - beispielsweise zwei gekreuzten BEF-Folien, zwei gekreuzten "Optical Lighting Films" (OLF) Typ 2301 von 3M™ und / oder einem oder mehreren Privacy-Filtern, z.B. Vikuiti von 3M™ -, einem in Betrachtungsrichtung vor dem Lichtkollimator angeordneten plattenförmigen, transparenten - vorderen - Lichtleiter, welcher aus einem transparenten, thermoplastischen oder thermoelastischen Kunststoff und darin verteilten Streupartikeln besteht und/oder an mindestens einer der Großflächen Auskoppelelemente aufweist, sowie - vorderen - Leuchtmitteln, die seitlich an den Schmalseiten des vorderen Lichtleiters angeordnet sind. Dabei sind in der Betriebsart B1 für einen freien Sichtbereich mindestens die vorderen Leuchtmittel und wahlweise auch der flächige Strahler eingeschaltet, d.h. wenn der flächige Strahler als Lichtleiter ausgebildet ist, werden selbstredend die Leuchtmittel des flächigen Strahlers eingeschaltet. In der Betriebsart B2 für einen eingeschränkten Sichtbereich sind die vorderen Leuchtmittel aus- und der flächige Strahler eingeschaltet, d.h. wenn der flächige Strahler als Lichtleiter ausgebildet ist, werden ebenso die ihm zugeordneten Leuchtmittel eingeschaltet.

Der flächige Strahler kann beispielsweise ausgebildet sein als Side-light, Edgelight, Direct LED Backlight, edge LED Backlight, als Dunkelfeldbeleuchtung, als OLED oder als ein anderer Flächenstrahler.

Für den vorderen Lichtleiter und ggf. den Lichtleiter des flächigen Strahlers gelten die weiter oben genannten Ausgestaltungsmöglichkeiten zum Lichtleiter oberhalb des Bildgebers analog.

Vorteilhaft werden als Streupartikel in den transparenten Lichtleitern Titandioxid-Partikel einer mittleren Partikelgröße von 150 - 500 nm in einer Konzentration bezogen auf das Gewicht des jeweiligen Lichtleiters von 0.01 - 300 Gew.-ppm eingesetzt.

Dabei können die transparenten Lichtleiter jeweils aus einem Matrixkunststoff A und darin verteilten Streupartikeln aus einem Polymerisat B bestehen, wobei der Anteil der Streupartikel bestehend aus Polymerisat B jeweils 0,01 bis 3 Gewichtsprozent bezogen auf den Matrixkunststoff A beträgt, und die Brechzahl nD(B) des Polymerisats B um mindestens 0,002 Einheiten, bevorzugt um mindestens 0,01 Einheiten über der Brechzahl nD(A) des Matrixkunststoffs A liegt.

Ferner können die Lichtleiter mindestens 40 Gew. %, bevorzugt mindestens 60 Gew. %, Polymethylmethacrylat bezogen auf ihr Gewicht, beinhalten.

Darüber hinaus kann es vorteilhaft sein, wenn auf der Oberseite des Bildgebers und/oder auf mindestens einer der Großflächen des Lichtleiters vor dem Bildgeber Mittel zur Reflexminderung, etwa eine Antiglare- und/oder ein Antireflexbeschichtung angeordnet sind. Insbesondere eine Antiglarebeschichtung dient im Zusammenhang mit der Erfindung nicht allein der Verminderung von direkten Reflexen externer Lichtspots, sondern erlaubt vielmehr auch die gestreute Rückreflexion des zum Bildgeber hin vom Lichtleiter vor dem Bildgeber abgestrahlten Lichtes.

Es ist außerdem möglich, die Hintergrundbeleuchtung als nicht schaltbar, d.h. als stets Licht in etwa in den Halbraum abstrahlend, auszugestalten.

In allen vorgenannten Ausgestaltungen können die besagten Leuchtmittel LEDs bzw. LED-Zeilen oder Laserdioden sein. Andere Varianten sind denkbar und liegen im Rahmen der Erfindung.

In einer weiteren, bevorzugten Ausgestaltung sind die Leuchtmittel zur Abstrahlung farbigen Lichts ausgebildet. Unter farbigem Licht wird insbesondere sichtbares Licht verstanden, welches nicht weiß ist, also z.B. Licht in den Farben Rot, Grün, Blau, Türkis, Gelb, Cyan oder Magenta. Ferner kann dieses Licht wahlweise in verschiedenen Helligkeitsstufen abgestrahlt werden.

Außerdem ist es möglich, dass die Farbigkeit des von den Leuchtmitteln ausgehenden Lichtes auch zeitlich moduliert wird, etwa in Farbe und/oder Helligkeit. Darüber hinaus können die Leuchtmittel auch mit verschiedenen einzelnen Leuchtmitteln bzw. Leuchtelementen umgesetzt werden, etwa RGB-LEDs in LED-Zeilen, die gleichzeitig oder zeitlich versetzt und/oder räumlich versetzt jeweils Licht unterschiedlicher Farben und/oder unterschiedlicher Helligkeit abstrahlen.

In der Betriebsart B2 ist das aus schrägen, durch die Winkeleinschränkung geblockten Sichtrichtungen, wahrnehmbare Bild je nach Ausgestaltung der Leuchtmittel dann eine entsprechend gefärbte Fläche, in der Regel jedoch gerade nicht eine schwarze oder weiße Fläche, da das farbige Licht, welches der Lichtleiter aussendet, aus schräger Betrachtungsrichtung selbst einen hellen Bildinhalt sichtbar überstrahlt.

Die Leuchtmittel können Licht in einer Farbe abstrahlen, welche im vom transmissiven Bildgeber dargestellten Bild nicht vorkommt. Alternativ können die Leuchtmittel Licht in einer Farbe abstrahlen, welche im vom transmissiven Bildgeber dargestellten Bild vorkommt bzw. im Farbspektrum nahe an einer solchen Farbe liegt. Außerdem können die Leuchtmittel Licht in einer Farbe abstrahlen, die in etwa der Komplementärfarbe einer Farbe, welche im vom transmissiven Bildgeber dargestellten Bild vorkommt, entspricht.

Weitere Regeln können aufgestellt werden, etwa dass die für die vorgenannte Auswahl der Farbe im Bild, welche die Auswahl der Farbe des Lichtes der Leuchtmittel indiziert, die im Bild flächenmäßig am häufigsten vorkommende Farbe sein kann. Die Wellenlängenbereiche des von den Leuchtmitteln abgestrahlten Lichtes können spektral vollständig, teilweise oder gar nicht mit den Wellenlängenbereichen des von der Bildwiedergabeeinrichtung ausgehenden Lichtes übereinstimmen.

Besonders vorteilhaft findet der erfindungsgemäße Bildschirm Verwendung zur Eingabe oder Anzeige von vertraulichen Daten, beispielweise von PIN-Geheimnummern, E-Mails, SMS oder Passwörtern, an Geldautomaten, Zahlungsterminals oder mobilen Geräten.

Für alle Ausgestaltungen gilt, dass jeder vorhandene Lichtleiter mindestens eine Lichteintrittsfläche und mindestens eine Lichtaustrittsfläche aufweist, wobei das Verhältnis von Lichtaustrittsfläche zu Lichteintrittsfläche mindestens 4 beträgt.

Bevorzugt weisen der oder die Lichtleiter eine Konzentration an Streupartikeln von Titandioxidpartikeln von 0.1 - 50 Gew.-ppm auf, besonders bevorzugt 0.1 - 10 Gew.-ppm. Dabei haben die Titandioxidpartikel eine mittlere Partikelgröße von 160 bis 450 nm, besonders bevorzugt jedoch von 170 bis 400 nm. Der Haze-Wert der Lichtleiter, gemessen nach ASTM D1003, liegt bevorzugt im Bereich von 0, 2 bis 2%. Hinter dem hintersten Lichtleiter der Hintergrundbeleuchtung, falls dort ein Lichtleiter vorhanden ist, kann beispielsweise eine weiße und/oder reflektierende Fläche angeordnet sein.

Im erfindungsgemäßen Bildschirm kann weiterhin eine elektronische Ansteuerung angeordnet sein, welche den Übergang zwischen den Betriebsmodi B1 und B2 oder umgekehrt graduell steuert, indem die Hintergrundbeleuchtung, die Leuchtmittel und ggf. weitere Komponenten entsprechend angesteuert werden. Dabei kann vorgesehen sein, dass über einen zeitlichen Verlauf hinweg jeweils die Helligkeit einer oder mehrerer Komponenten (i.d.R. Leuchtmittel) auf null gefahren wird, während gleichzeitig die Helligkeit anderer Komponenten (i.d.R. anderer Leuchtmittel) auf ein Maximum oder einen bestimmten Wert hinaufgefahren wird, und umgekehrt.

Ferner kann in bestimmten Ausgestaltungsvarianten vorgesehen sein, dass der Lichtleiter vor dem Bildgeber auf seiner dem Bildgeber zugewandten Seite teilverspiegelt ist. Dabei kann die Stärke der Verspiegelung zum Ausgleich von Helligkeitsunterschieden in der Betriebsart B1 über die Fläche des aus dem Lichtleiter ausgekoppelten Lichts variierend ausgestaltet sein, oder nur solche Bereiche sind teilverspiegelt, bei denen die Helligkeit ohne Verspiegelung unter einen vorgegebenen Grenzwert abgefallen ist.

Grundsätzlich bleibt die Leistungsfähigkeit der Erfindung erhalten, wenn die vorbeschriebenen Parameter in bestimmten Grenzen variiert werden.

Weiterhin können die gewünschten eingeschränkten Winkelbereiche für den Modus B2 für eine eingeschränkte Sicht jeweils für die horizontale und vertikale Richtung unabhängig voneinander definiert und umgesetzt werden. Beispielsweise könnte in der vertikalen Richtung ein größerer Winkel (oder ggf. gar keine Einschränkung) sinnvoll sein als in der horizontalen Richtung, etwa wenn bei Geldautomaten Personen mit unterschiedlicher Größe etwas sehen sollen, während der Seiteneinblick stark eingeschränkt bleiben soll. Für POS-Zahlterminals sind hingegen auf Grund von Sicherheitsbestimmungen oftmals Sichteinschränkungen im Modus B2 sowohl in horizontaler als in vertikaler Richtung notwendig.

Eine nicht erfindungsgemäße Ausgestaltung betrifft einen Bildschirm, der in mindestens zwei Betriebsarten B1 für einen freien Sichtmodus und B2 für einen eingeschränkten Sichtmodus betrieben werden kann, wobei der Bildschirm zunächst eine flächenartig ausgedehnte Hintergrundbeleuchtung, die in der Betriebsart B1 für einen freien Sichtmodus Licht in einen nicht eingeschränkten Winkelbereich abstrahlt, und die in der Betriebsart B2 für einen eingeschränkten Sichtmodus Licht in einen eingeschränkten Winkelbereich abstrahlt, wobei das von der Hintergrundbeleuchtung ausgehende Licht in mindestens einer Richtung, die in einem Winkel größer als 45 Grad zur Flächennormale der Hintergrundbeleuchtung gelegen ist, mit höchstens 6% der maximalen Lichtstärke abgestrahlt wird. Der Bildschirm umfasst außerdem einen in Betrachtungsrichtung vor der Hintergrundbeleuchtung angeordneten transmissiven Bildgeber, Leuchtmittel, welche seitlich an Schmalseiten des Lichtleiters angeordnet sind, sowie mindestens einen in Betrachtungsrichtung vor der Hintergrundbeleuchtung gelegenen, plattenförmigen und Lichtleiter, welcher entweder aus einem thermoplastischen oder thermoelastischen Kunststoff mit darin homogen verteilten Streupartikeln besteht oder an mindestens einer der Großflächen Auskoppelelemente aufweist.

Im Falle des Vorhandenseins von Streupartikeln im Lichtleiter bestehen diese aus Titandioxid, Bariumsulfat, silsesquioxanen Partikeln und/oder vernetzten Polystyrol-Partikeln mit einer mittleren Partikelgröße von 150 - 500 nm, welche in einer Konzentration bezogen auf das Gewicht des Lichtleiters von 0.01 - 300 Gew.-ppm eingesetzt werden. Der Lichtleiter weist in diesem Fall weder eine Bedruckung, noch lichtstreuenden Störstellen auf. Sowohl beim Vorhandensein von Streupartikeln, als auch in dem Fall, dass der Lichtleiter an mindestens einer der Großflächen Auskoppelelemente aufweist - diese können dort gesondert aufgebracht werden oder auch dort ausgebildet werden, beispielsweise durch Ätzung -, ist der Lichtleiter für das von der Hintergrundbeleuchtung ausgehende Licht zu mindestens 85% transparent.

Dadurch wird einerseits das aus den Leuchtmitteln seitlich in den Lichtleiter einfallende Licht für einen freien Sichtbereich in der Betriebsart B1 in Richtungen, die in Winkeln zwischen 45 Grad und 75 Grad zur Flächennormale der Hintergrundbeleuchtung gelegen sind, mit mindestens 12% der maximalen Lichtstärke des aus dem Lichtleiter senkrecht zur Oberfläche austretenden Lichtes abgestrahlt, und weist andererseits das aus dem Lichtleiter an mindestens einem Punkt seiner Oberfläche austretende Licht, welches von den Leuchtmitteln herrührt, wenn diese eingeschaltet sind, in mindestens einem Winkel α zur Oberfläche des Lichtleiters, mit α < 80 Grad, eine höhere Lichtstärke aufweist, als das an dem besagten Punkt der Oberfläche des Lichtleiters senkrecht zur Oberfläche des Lichtleiters austretende Licht.

In der Betriebsart B2 ist dabei die Hintergrundbeleuchtung eingeschaltet und sind die Leuchtmittel ausgeschaltet, in der Betriebsart B1 sind mindestens die Leuchtmittel eingeschaltet.

Für die Betriebsart B1 ist es unbedingt erforderlich, dass die Leuchtmittel eingeschaltet sind, während die Hintergrundbeleuchtung ein- oder ausgeschaltet sein kann. Ist die Hintergrundbeleuchtung dabei ausgeschaltet, sorgt nur das Licht aus den Leuchtmitteln für die im Winkel nicht eingeschränkte Beleuchtung. Sind hingegen für die Betriebsart B1 sowohl die Leuchtmittel als auch die Hintergrundbeleuchtung eingeschaltet, kann eine größere Helligkeit erzielt werden. Dabei ist es dann besonders vorteilhaft, dass das aus dem Lichtleiter an mindestens einem Punkt seiner Oberfläche austretende Licht, welches von den Leuchtmitteln herrührt, wenn diese eingeschaltet sind, in mindestens einem Winkel α zur Oberfläche des Lichtleiters, mit α < 80 Grad, eine höhere Lichtstärke aufweist, als das an dem besagten Punkt der Oberfläche des Lichtleiters senkrecht zur Oberfläche des Lichtleiters austretende Licht. Diese technische Umsetzung bedeutet nämlich, dass sich das Licht, welches aus den Leuchtmitteln herrührt und seine stärkste(n) Helligkeit(en) nicht in etwa entlang der Mittelsenkrechten des Bildschirms aufweist, mit dem Licht, das von der Hintergrundbeleuchtung herrührt und seine stärkste Helligkeit in etwa entlang der Mittelsenkrechten des Bildschirms aufweist, sehr gut ergänzt, um über mindestens einen Halbwinkel hinweg (z.B. das Winkelspektrum der Horizontalen vor der Beleuchtungseinrichtung) eine homogenere und hellere Ausleuchtung zu erreichen, als wenn nur die besagten Leuchtmittel für die Betriebsart B1 eingeschaltet wären.

In einer Weiterentwicklung dieser nicht von der Erfindung umfassten Ausgestaltung ist der Winkel, den die Richtung, in welcher das von der Hintergrundbeleuchtung ausgehende Licht abgestrahlt wird, größer als 45+γ Grad zur Flächennormale der Hintergrundbeleuchtung ist, wobei die Hintergrundbeleuchtung mindestens eine Schicht zur Kollimation des von ihr abgestrahlten Lichtes enthält, welche die höchste Lichtdurchlässigkeit in einem Winkel von γ mit 0<γ<45 Grad zur Flächennormale der Hintergrundbeleuchtung aufweist. Die seitliche Neigung um den Winkel γ ist für verschiedene Anwendungen vorteilhaft. Beispielsweise kann in einem Cockpit eines Flugzeuges Information nur wahlweise für einen Piloten sichtbar sein, etwa wenn der Bildschirm samt Bildgeber in der Mitte der Kontrollkonsole angeordnet ist. Durch den Neigungswinkel γ wird dann in der Betriebsart B2 die Sichtbarkeit auf eine Schrägsicht, eben jener von nur einem Piloten, auf das System beschränkt.

Als Streupartikel für den Lichtleiter werden bevorzugt Titandioxid-Partikel in einer Konzentration bezogen auf das Gewicht des Lichtleiters von 0.1 - 50 Gew.-ppm, bevorzugt 0.1 - 10 Gew.-ppm., eingesetzt. Die Titandioxidpartikel weisen ergänzend oder alternativ bevorzugt eine mittlere Partikelgröße von 160 bis 450 nm und besonders bevorzugt von 170 bis 400 nm auf.

Ferner gilt, dass der Lichtleiter einen Haze-Wert von weniger als 7% aufweist, bevorzugt von weniger als 2%, jeweils gemessen gemäß ASTM D1003.

Es ist weiterhin vorteilhaft, wenn der Lichtleiter mindestens 40 Gewichtsprozent Polymethylmethacrylat, bevorzugt mindestens 60 Gewichtsprozent Polymethylmethacrylat, bezogen auf sein Gewicht, umfasst.

Eine weitere Ausgestaltung dieses nicht von der Erfindung umfassten Bildschirms sieht vor, dass für die Betriebsart B2 das von der Hintergrundbeleuchtung herrührende und aus dem Lichtleiter an jedem Punkt seiner Oberfläche - in Betrachtungsrichtung - austretende Licht in Winkeln β > 30 Grad, gemessen senkrecht zur Oberfläche des Lichtleiters und in horizontaler Orientierung zur Oberfläche des Lichtleiters, maximal 5% von der Lichtstärke aufweist, die das Licht aufweist, welches von einem solchen Punkt der Oberfläche des Lichtleiters senkrecht zu seiner Oberfläche austritt.

Besonders bevorzugt enthält die Hintergrundbeleuchtung dazu mindestens eine optische Schicht zur Kollimation von Licht, um eine winkeleingeschränkte Abstrahlcharakteristik des von ihr ausgestrahlten Lichtes zu erzielen. Bei der Hintergrundbeleuchtung handelt es sich vorzugsweise um ein Backlight, beispielsweise ein Side-light, Edgelight, Direct LED Backlight, edge LED Backlight, OLED oder einen anderen Flächenstrahler, auf welches ein permanenter Sichtschutzfilter, auch als Privacy-Filter (z.B. Vikuiti™ von 3M™ oder LCF von Shin Etsu™) bezeichnet, aufgebracht ist, welcher als Lichtkollimator bzw. räumlicher Lichtfilter wirkt, nach dessen Durchgang das Licht von der Hintergrundbeleuchtung im Wesentlichen nur noch in einen eingeschränkten Winkelbereich abgestrahlt wird.
Zusätzlich zu der/den Schicht/en zur Kollimation können noch im Winkel vom 90 Grad gekreuzte Komponenten vom Typ "Optical Lighting Film" (OLF) Typ 2301 von 3M™ vorhanden sein, um eine Vor-Kollimation zu erzielen und dabei das Licht zu bündeln.

Weiterhin kann die nächste optische Komponente unterhalb des Lichtleiters mindestens eine teilweise reflektierende Oberfläche für in der Betriebsart B1 aus dem Lichtleiter nach unten austretendes Licht aufweisen. Dadurch wird derartig nach unten abgestrahltes Licht wenigstens teilweise wieder auf den Lichtleiter zurückreflektiert und tritt zumindest teilweise durch diesen hindurch. Da der Lichtleiter Licht von beiden Großflächen, also nach oben und nach unten abstrahlt - die Richtung nach unten weist in Richtung der Hintergrundbeleuchtung -, wird auf diese Weise eine Art Lichtrecycling ermöglicht. Hier kann es ausreichen, dass die besagte nächste optische Komponente, oftmals also die optische Schicht zur Kollimation (z.B. Privacy-Filter), nicht entspiegelt ist oder aber eine Teilverspiegelung aufweist, die für von unten, d.h. von der Hintergrundbeleuchtung, kommendes Licht so transparent wie möglich ist.

Grundsätzlich bleibt die Leistungsfähigkeit der Erfindung erhalten, wenn die vorbeschriebenen Parameter in bestimmten Grenzen variiert werden. So kann etwa die Hintergrundbeleuchtung Licht mit einer solchen Abstrahlcharakteristik abstrahlen, dass in Richtungen, die in Winkeln größer als 10..45 Grad zur Flächennormale der Hintergrundbeleuchtung gelegen sind, höchstens 0..20 % der maximalen Lichtstärke abgestrahlt werden.

Ungeachtet dessen kann ferner der in Betrachtungsrichtung vor der Hintergrundbeleuchtung gelegene Lichtleiter, welcher für das von der Hintergrundbeleuchtung ausgehende Licht zu mindestens 85% - oder auch zu weniger als 85%, etwa 70% oder sogar nur 50% - transparent ist, das aus Leuchtmitteln seitlich einfallende Licht in einen möglichst großen Winkelbereich ablenken, so dass in Richtungen, die in Winkeln größer als 10° bis 100° zur Flächennormale der Hintergrundbeleuchtung gelegen sind, mindestens 10..70% der maximalen Lichtstärke abgestrahlt werden.

Bei den Leuchtmitteln handelt es sich z.B. um LEDs oder Laserdioden. Außerdem ist es sinnvoll, wenn die Lichteinkopplung aus den seitlich angeordneten Leuchtmitteln in den Lichtleiter von mindestens zwei Seiten, bevorzugt von gegenüberliegenden Seiten, erfolgt.

Ganz besonders bevorzugt ist vor dem Bildschirm ein transmissiver Bildgeber - auch als Bildwiedergabeeinrichtung bezeichnet -, beispielsweise ein LCD-Panel, angeordnet. Damit können die beiden Betriebsarten B1 und B2 entsprechend für den Bildschirm umgesetzt werden.

Alternativ ist es möglich, dass der Lichtleiter auf seiner der Hintergrundbeleuchtung zugewandten Seite teilverspiegelt ist, wobei die Stärke der Verspiegelung zum Ausgleich von Helligkeitsunterschieden in der Betriebsart B1 über die Fläche des aus dem Lichtleiter ausgekoppelten Lichts variierend ausgestaltet ist, oder wobei nur solche Bereiche teilverspiegelt sind, bei denen die Helligkeit ohne Verspiegelung unter einen vorgegebenen Grenzwert abgefallen ist.

Ferner kann die der Bildschirm eine Steuerung umfassen, welche in der Betriebsart B1 Helligkeitsunterschiede über die Fläche des aus dem Lichtleiter ausgekoppelten Lichtes vermittels einer zu diesen Helligkeitsunterschieden komplementären Steuerung der auf dem transmissiven Bildgeber dargestellten Bildinhalte ausgleicht, so dass ein im Wesentlichen bezüglich der Helligkeit homogenes Bild auf dem transmissiven Bildgeber wahrnehmbar ist.

Schließlich kann der erfindungsgemäße Bildschirm vorteilhaft zur Eingabe oder Anzeige von vertraulichen Daten, beispielweise von PIN-Geheimnummern, E-Mails, SMS oder Passwörtern, an Geldautomaten, Zahlungsterminals oder mobilen Geräten verwendet werden.

Überdies ist eine Teilverspiegelung auf der Rückseite des transmissiven Bildgebers zur weiteren Homogenisierung der Lichtausbeute aus dem Lichtleiter vorteilhaft. Auch diese kann zum Ausgleich von Helligkeitsunterschieden analog zur Teilverspiegelung auf dem Lichtleiter variierend ausgestaltet oder nur bereichsweise aufgebracht sein.

Von Vorteil ist ebenso ein bereits vom Design her kollimiertes Backlight als Hintergrundbeleuchtung, d.h. die Lichtquelle ist hierbei so konzipiert, dass ihr Licht nur in einen vorbeschriebenen, eingeschränkten Winkelbereich abgestrahlt wird. Weiterhin kann es günstig sein, wenn stets die gleichen Lichtquellen, z.B. die besagten seitlich angeordneten Leuchtmittel, für beide Betriebsarten verwendet werden. Das Licht wird dann für die Umschaltung zwischen den beiden Betriebsarten B1 und B2 beispielsweise über einen optoelektronischen und/oder optomechanischen Schalter einmal in den Lichtleiter und/oder einmal in die Hintergrundbeleuchtung eingekoppelt. Als Schalter kommt hier z.B. ein Shutter oder eine mechanische Umschaltung wie ein kippbarer Spiegel in Frage. Auch können die Leuchtmittel zweizeilig ausgebildet sein, wobei dann jeweils nur die gewünschte bzw. entsprechende Zeile angeschaltet wird.

Weiterhin können die gewünschten bzw. die erlaubten Abstrahlungsrichtungen für den Modus B2 für eine eingeschränkte Sicht jeweils für die horizontale und vertikale Richtung unabhängig voneinander definiert und umgesetzt werden. Beispielsweise könnte in der vertikalen Richtung ein größerer Winkel sinnvoll sein, als in der horizontalen Richtung, etwa wenn bei Geldautomaten Personen mit unterschiedlicher Größe etwas sehen sollen, während der Seiteneinblick stark eingeschränkt bleiben soll. Dies wird insbesondere durch die Wahl der Licht kollimierenden Schichten, z.B. der Privacy-Filter, erreicht.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen 1 bis 11, die auch erfindungswesentliche Merkmale offenbaren, noch näher erläutert. Es zeigen
- Fig.1: eine Prinzipskizze zur Auskopplung von Licht, das seitlich in einen Lichtleiter eingekoppelt wird, in einen großen Raumwinkel,
- Fig. 2: eine Prinzipskizze zum Durchgang von Licht, das aus einer Hintergrundbeleuchtung herrührt, durch einen Lichtleiter,
- Fig. 3: eine Prinzipskizze einer ersten Ausgestaltung eines Bildschirms in einer Betriebsart für einen eingeschränkten Sichtmodus,

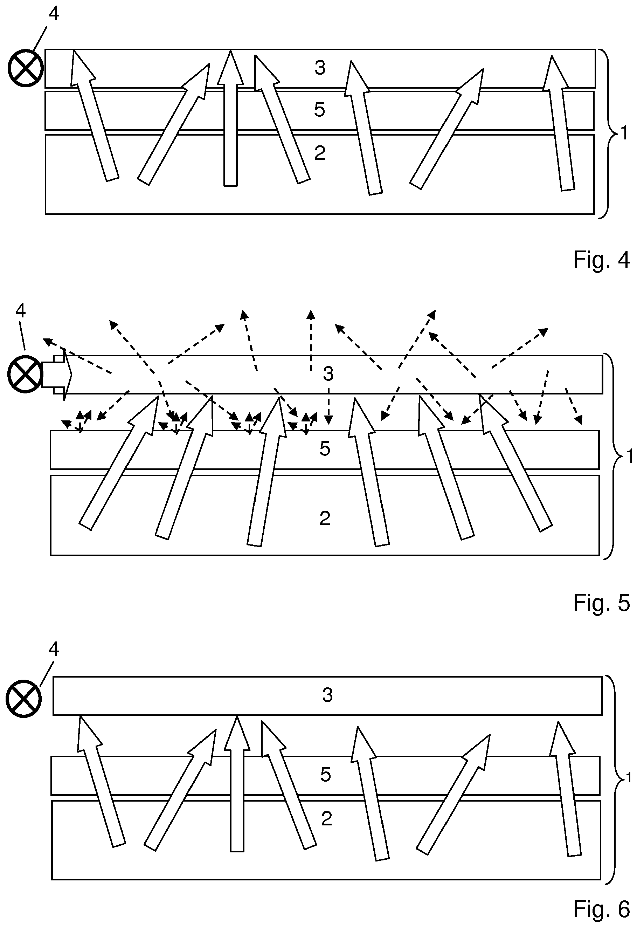

- Fig. 4: eine Prinzipskizze der ersten Ausgestaltung des Bildschirms in einer Betriebsart für einen freien Sichtmodus,
- Fig. 5: eine Prinzipskizze einer zweiten Ausgestaltung eines Bildschirms in der Betriebsart für einen eingeschränkten Sichtmodus,
- Fig. 6: eine Prinzipskizze der zweiten Ausgestaltung des Bildschirms in der Betriebsart für einen freien Sichtmodus,

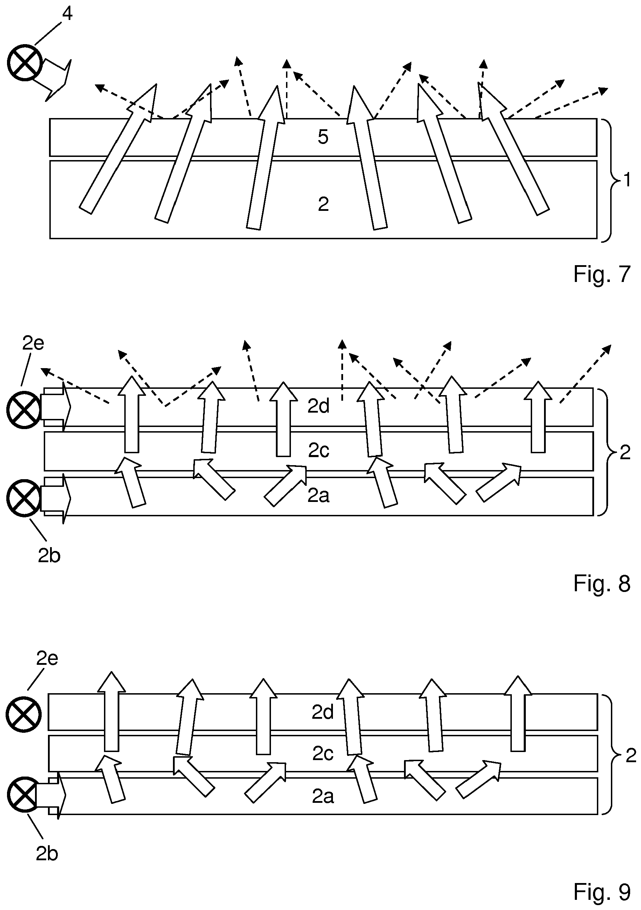

- Fig. 7: eine Prinzipskizze einer dritten Ausgestaltung eines Bildschirms in der Betriebsart für einen eingeschränkten Sichtmodus,
- Fig. 8: eine Prinzipskizze zu einer vorteilhaften Ausgestaltung einer Hintergrundbeleuchtung, hier dargestellt für eine Betriebsart für einen freien Sichtmodus,
- Fig. 9: eine Prinzipskizze zu der Hintergrundbeleuchtung aus Fig. 8, jedoch in einer Betriebsart für einen eingeschränkten Sichtmodus,

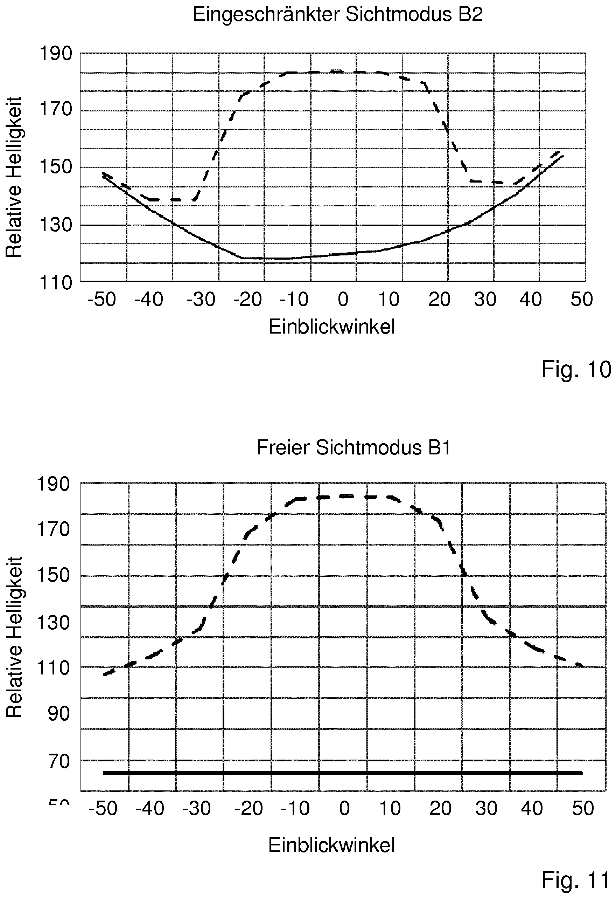

- Fig. 10: eine beispielhafte Messung für die Sichtverhältnisse beim Blick auf einen Bildschirm in der Betriebsart für einen eingeschränkten Sichtmodus,
- Fig. 11: eine beispielhafte Messung für die Sichtverhältnisse beim Blick auf einen Bildschirm in der Betriebsart für einen freien Sichtmodus,

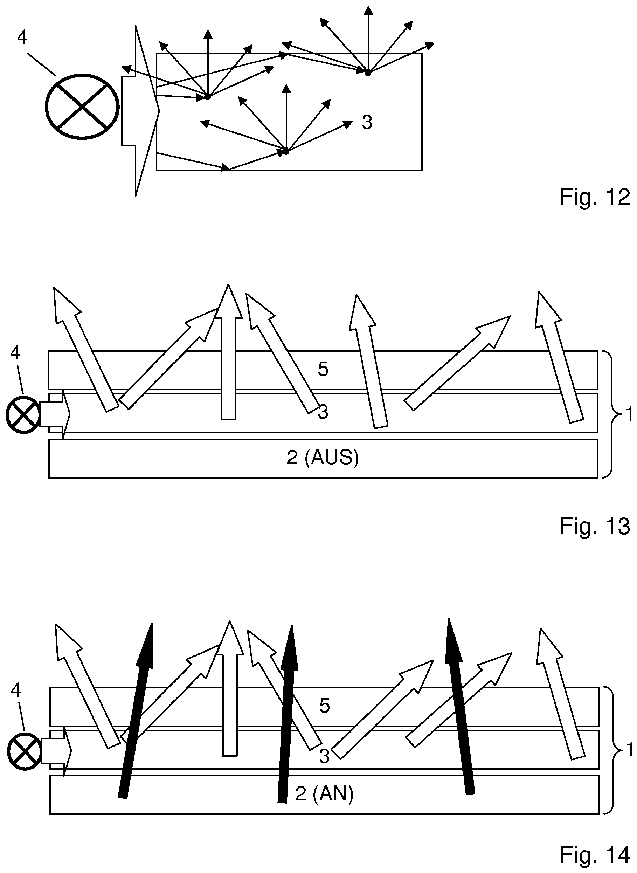

- Fig. 12: die Auskopplung von Licht für eine vierte, nicht zur Erfindung gehörige Ausgestaltung des Bildschirms,
- Fig. 13: eine Prinzipskizze der vierten Ausgestaltung des Bildschirms in der Betriebsart für einen freien Sichtmodus mit ausgeschalteter Hintergrundbeleuchtung,
- Fig. 14: eine Prinzipskizze der vierten Ausgestaltung des Bildschirms in der Betriebsart für den freien Sichtmodus mit eingeschalteter Hintergrundbeleuchtung,

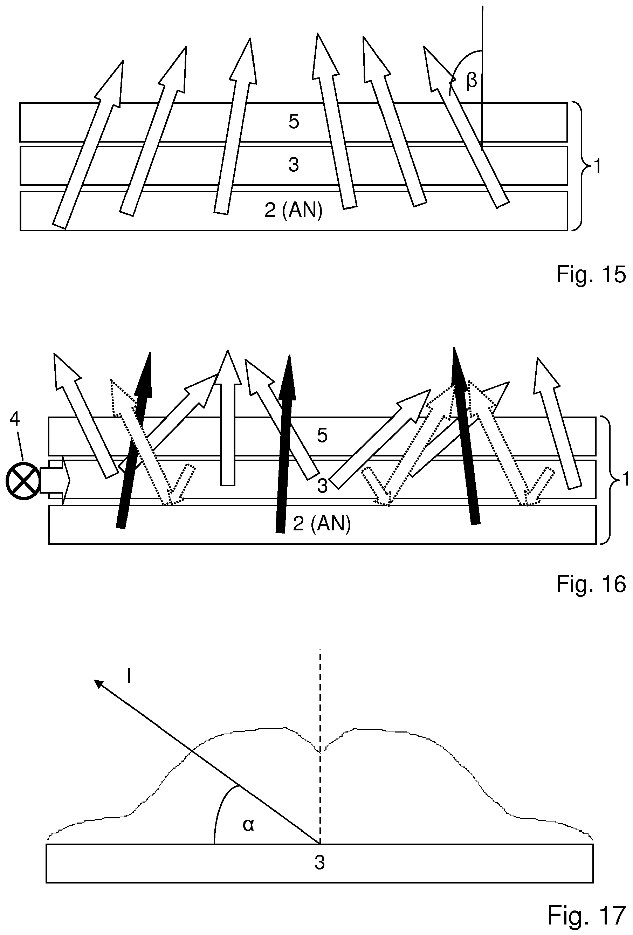

- Fig. 15: eine Prinzipskizze der vierten Ausgestaltung des Bildschirms in einer Betriebsart für einen eingeschränkten Sichtmodus,
- Fig. 16: eine Prinzipskizze einer fünften, nicht zur Erfindung gehörigen Ausgestaltung des Bildschirms in einer Betriebsart für einen freien Sichtmodus mit eingeschalteter Hintergrundbeleuchtung, und
- Fig. 17: ein Diagramm zu einer beispielhaften Helligkeitsverteilung in verschiedene Raumrichtungen bezüglich des aus einem optischen Element ausgekoppelten Lichtes.

Die Zeichnungen sind nicht maßstabsgetreu und geben lediglich Prinzipdarstellungen, in der Regel Schnittdarstellungen, wieder.

### Ausführliche Beschreibung der Zeichnungen

In Fig.1 ist eine Prinzipskizze zur Auskopplung von Licht, das seitlich von Leuchtmitteln 4 in einen Lichtleiter 3 - hier nur als kleiner Ausschnitt in Schnittdarstellung gezeigt - eingekoppelt wird, in einen großen Raumwinkel, dargestellt. Das Licht kann farbig sein. Die kleinen Punkte stilisieren Streupartikel als Streuzentren für das Licht, welches seitlich von den Leuchtmitteln 4 eingekoppelt wird. Auf Grund von Totalreflexion werden Strahlen des eingekoppelten Lichts - fett gezeichnete Strahlen - an der Außenwand wieder zurück in den Lichtleiter 3 geworfen, bis sie schließlich auf einen Streupartikel zur gewünschten Auskopplung treffen. Die Auskopplung ist durch Vielzahl von dünnen Strahlen stilisiert. Die Darstellung in Fig.1 ist zur besseren Erkennbarkeit stark stilisiert; in der Realität ist eine sehr große Vielzahl an Strahlengängen im Lichtleiter 3 umgesetzt.

Fig.2 zeigt eine Prinzipskizze zum Durchgang von Licht, das aus einer - zeichnerisch nicht dargestellten - Hintergrundbeleuchtung 2 herrührt, durch einen Lichtleiter 3. Die Streupartikel spielen dabei eine im Wesentlichen vernachlässigbare Rolle, da das Licht aus der Hintergrundbeleuchtung 2 herrührt, d.h. nicht seitlich durch eine Schmalseite von Leuchtmitteln 4 eingekoppelt wird und daher nicht bzw. kaum durch Totalreflexion im Lichtleiter 3 hin und her gelenkt wird.

Fig.3 zeigt eine Prinzipskizze für einen Bildschirm 1 in einer Betriebsart B2 für einen eingeschränkten Sichtmodus, bei der ein transmissiver Bildgeber 5 mit im Raumwinkel eingeschränkten Licht ausgeleuchtet wird, wobei das durch den Bildgeber 5 modulierte Licht von Licht aus einem Lichtleiter 3 (mit gestrichelten Pfeilen dargestellt) überlagert wird, um den Sichtschutzeffekt zu verstärken. Der Bildgeber 5 ist in Betrachtungsrichtung vor der Hintergrundbeleuchtung 2 angeordnet, es kann sich beispielsweise um ein LCD-Panel oder einen anderen, durchscheinenden Lichtmodulator handeln. In Betrachtungsrichtung vor dem Bildgeber 5 - mit oder ohne Abstand zu diesem - ist ein plattenförmiger Lichtleiter 3 angeordnet, welcher hier aus einem transparenten, thermoplastischen oder thermoelastischen Kunststoff und darin verteilten Streupartikeln besteht, alternativ oder ergänzend aber auch an mindestens einer Großfläche Auskoppelelemente aufweisen kann. Seitlich an Schmalseiten des Lichtleiters 3 sind Leuchtmittel 4 angeordnet, wobei in Fig. 3 die Leuchtmittel 4 nur einseitig eingezeichnet sind, sie können aber zusätzlich auch auf der gegenüberliegenden Schmalseite des Lichtleiters 3 angeordnet sein, oder an drei oder sogar an allen vier Schmalseiten.

In der Betriebsart B2 strahlt die Hintergrundbeleuchtung für einen eingeschränkten Sichtmodus Licht in einen eingeschränkten Winkelbereich ab. Die Leuchtmittel 4 sind eingeschaltet, so dass das von der Hintergrundbeleuchtung 2 in einen eingeschränkten Winkelbereich abgestrahlte und sodann durch den transmissiven Bildgeber 5 hindurchdringende Licht (mit den fetten Pfeilen eingezeichnet in Fig.3) von Licht (mit Strichlinien dargestellt) überlagert wird, welches der Lichtleiter 3 nunmehr flächig über einen großen Winkelbereich - d.h. in diesem Falle über einen Winkelbereich von mindestens 120 Grad oder mehr, bis nahezu zum Halbraum vor dem Lichtleiter 3 - abstrahlt, wodurch die Restsichtbarkeit eines auf dem transmissiven Bildgeber 5 dargestellten Bildes außerhalb des besagten eingeschränkten Winkelbereiches (deutlich) verringert oder sogar vollständig abgestellt wird.

Das durch den Bildgeber 5 mit Bildinformationen eines - hier nicht dargestellten - Bildes modulierte Licht kann auch von farbigem Licht aus dem Lichtleiter überlagert werden, um den Sichtschutzeffekt zu verstärken. Mit "farbigem Licht" ist insbesondere sichtbares Licht gemeint, welches nicht weiß ist, also z.B. Licht in den Farben Rot, Grün, Blau, Türkis, Gelb, Cyan, oder Magenta. Ferner kann dieses Licht wahlweise in verschiedenen Helligkeitsstufen abgestrahlt werden.

Außerdem ist es möglich, dass die Farbigkeit des von den Leuchtmitteln 4 ausgehenden Lichtes auch zeitlich moduliert wird, etwa in Farbe und/oder Helligkeit. Darüber hinaus können die Leuchtmittel 4 auch mit verschiedenen einzelnen Leuchtmitteln umgesetzt werden, etwa RGB-LEDs in LED-Zeilen, die gleichzeitig oder zeitlich versetzt und/oder räumlich versetzt jeweils Licht unterschiedlicher Farben abstrahlen.

Demgegenüber zeigt Fig.4 eine Prinzipskizze des Bildschirms 1 in der Betriebsart B1 für einen freien Sichtmodus, bei der der Bildgeber 5 mit im Raumwinkel nicht eingeschränktem Licht ausgeleuchtet wird, wobei das durch den Bildgeber 5 modulierte Licht nicht von Licht aus einem Lichtleiter 3 überlagert wird.

In der Betriebsart B1 strahlt die Hintergrundbeleuchtung 2 für einen freien Sichtmodus Licht in einen nicht eingeschränkten Winkelbereich ab. Dabei sind im Unterschied zur Betriebsart B1 die Leuchtmittel 4 ausgeschaltet, so dass das von der Hintergrundbeleuchtung 2 ausgehende und sodann durch den transmissiven Bildgeber 5 hindurchdringende Licht im Wesentlichen unbeeinflusst durch den Lichtleiter 3 hindurchtritt.

Fig.5 gibt eine Prinzipskizze einer zweiten Ausgestaltung eines Bildschirms 1 in der Betriebsart B2 für einen eingeschränkten Sichtmodus wieder. Im Unterschied zu der in Fig. 3 gezeigten Ausgestaltung ist hier der Lichtleiter 3 in einem Abstand von mindestens 1 mm vom Bildgeber 5 oberhalb dessen bzw. entfernt von diesem näher zum Betrachter angeordnet. Auch die Leuchtmittel 4 sind in Betrachtungsrichtung außerhalb des aktiven Bildwiedergabebereichs des Bildgebers 5 und gleichzeitig in einem Abstand von mindestens 1 Millimeter oberhalb des Bildgebers 5 angeordnet, hier auf gleicher Höhe wie der Lichtleiter 3. In der Betriebsart B2 sind die Leuchtmittel 4 eingeschaltet, und von der Hintergrundbeleuchtung 2 in einen eingeschränkten Winkelbereich abgestrahltes und sodann durch den transmissiven Bildgeber 5 hindurchdringendes (mit fetten Pfeilen in Fig.3 eingezeichnete) Licht wird von Licht überlagert, welches den Bildgeber 5 auf Grund der Einstrahlung von Licht aus dem Lichtleiter 3 diffus und/oder gerichtet in den Betrachtungsraum zurückstreut bzw. -reflektiert (hier mit kleinen Pfeilen an Strichlinien dargestellt) und/oder welches (hier mit längeren Strichlinien dargestellt) vom Lichtleiter 3 in den Betrachtungsraum abgestrahlt wird, so dass die Restsichtbarkeit eines auf dem transmissiven Bildgeber 5 dargestellten Bildes außerhalb des besagten eingeschränkten Winkelbereiches verringert wird.

Demgegenüber zeigt Fig.6 eine Prinzipskizze der zweiten Ausgestaltung des Bildschirms 1 in der Betriebsart B1 für einen freien Sichtmodus, bei der der Bildgeber 5 mit im Raumwinkel nicht eingeschränkten Licht (siehe fette Pfeile) ausgeleuchtet wird, wobei das durch den Bildgeber 5 modulierte Licht nicht von Licht aus einem Lichtleiter 3 überlagert wird, weil die Leuchtmittel 4 ausgeschaltet sind.

Schließlich zeigt Fig.7 die Prinzipskizze einer dritten Ausgestaltung eines erfindungsgemäßen Bildschirms 1 in der Betriebsart B2 für einen eingeschränkten Sichtmodus, bei dem der Bildgeber 5 mit im Raumwinkel eingeschränkten Licht (siehe fette Pfeile) ausgeleuchtet wird, wobei das durch den Bildgeber 5 modulierte Licht von Licht überlagert wird, das von einer räumlich beabstandeten Lichtquelle 4 herrührt (siehe dicker Pfeil an den Leuchtmitteln 4) und von der Bildschirmoberfläche in den Betrachtungsraum zurückreflektiert bzw. -gestreut wird (durch die Pfeile mit Strichlinien angedeutet), um den Sichtschutzeffekt zu verstärken. Im Unterschied zu der in Fig. 5 gezeigten Ausgestaltung sind hier die Leuchtmittel 4 nicht auf gleicher Höhe wie der Lichtleiter 3, sondern noch weiter von dem Bildgeber 5 beabstandet, ggf. sogar räumlich getrennt vom Bildschirm 4 angeordnet.

Eine praktisch sehr hilfreiche Anwendung der in Fig.7 gezeigten Ausgestaltung wird im Folgenden beispielhaft beschrieben: In einem Personenkraftwagen ist auf der Beifahrerseite ein Bildschirm 1 zur Darstellung von Navigation, Entertainment und anderen Daten angeordnet. Bei für den Fahrer wichtigen Daten, etwa der Navigation, würde der erfindungsgemäß ausgestaltete Bildschirm 1 in die Betriebsart B1 für einen freien Sichtmodus schalten, so dass Fahrer und Beifahrer die Daten sehen können. Wird der Bildschirm jedoch als Unterhaltungsmedium für den Beifahrer genutzt, könnte die Darstellung den Fahrer ablenken. Hier wird also der Bildschirm 1 bevorzugt in die Betriebsart B2 für einen eingeschränkten Sichtwinkel geschaltet, so dass der Fahrer möglichst nichts auf dem Bildschirm 1 erkennen kann und somit nicht vom Fahren abgelenkt wird. Um erfindungsgemäß mögliche Restsichtbarkeit von Bildinformationen auf dem Bildgeber 5 auszuschließen, sind nun ein oder mehrere Leuchtmittel 4, vorzugsweise weiße LEDs, vorhanden. Im Fahrzeug könnten diese z.B. in der Beifahrertür eingebaut sein. Diese Leuchtmittel 4 werden für die Betriebsart B2 erfindungsgemäß eingeschaltet und beleuchten dann aus einigem Abstand von der Seite den Bildgeber 5. Im Ergebnis wird die Restsichtbarkeit auf dem Bildgeber 5 für den Fahrer vollständig oder zumindest nahezu vollständig ausgeschlossen, da wie weiter oben beschrieben das vom Bildgeber 5 reflektierte bzw. zurückgestreute Licht jegliches von dem Bildgeber 5 noch in Richtung Fahrer ausgehende Licht überlagert und somit überstrahlt. Bevorzugt verfügen die Leuchtmittel 4 in dieser Ausgestaltung über Mittel zur Fokussierung, etwa einfache Linsen vor den LEDs, und über eine entsprechende Abdeckblende, so dass keine der mitfahrenden Personen direkt angeleuchtet und somit unangenehm bestrahlt wird. Im besten Falle trifft das von den Leuchtmitteln 4 ausgehende Licht nahezu ausschließlich auf den Bildgeber 5.

Bei allen bisher beschriebenen Anordnungen strahlt in der Betriebsart B1 die Hintergrundbeleuchtung 2 für einen freien Sichtmodus Licht in einen nicht eingeschränkten Winkelbereich ab. Dabei sind im Unterschied zur Betriebsart B2 die Leuchtmittel 4 ausgeschaltet, so dass das von der Hintergrundbeleuchtung 2 ausgehende und sodann durch die transmissive Bildwiedergabeeinheit 5 hindurchdringende Licht im Wesentlichen unbeeinflusst durch den Lichtleiter 3 hindurchtritt.

Der plattenförmige Lichtleiter weist in der Regel einen Haze-Wert von weniger als 10%, bevorzugt von weniger als 4% auf, gemessen gemäß ASTM D1003. Ferner kommen als Streupartikel insbesondere Titandioxidpartikel in Frage. Andere Ausgestaltungen sind jedoch möglich, etwa mit Partikeln aus Bariumsulfat, mit silsesquioxanen Partikeln oder mit vernetzten Polystyrol-Partikeln oder noch anderen Arten von Partikeln. Die Streupartikel sind in der Regel homogen verteilt, wodurch der Lichtleiter 3 keine inhomogene optische Struktur aufweist. Ferner enthält der plattenförmige Lichtleiter 3 mindestens zwei einander gegenüberliegende Großflächen, die parallel oder geneigt zueinander angeordnet sind. Eine keilförmige Struktur ist möglich, wenngleich parallele Großflächen von Vorteil sind.

Die flächenartig ausgedehnte Hintergrundbeleuchtung 2 kann beispielsweise ausgebildet sein, wie in der WO 2015/121398 vorgeschlagen.

Dazu zeigt Fig.8 eine Prinzipskizze zur einen vorteilhaften Ausgestaltung einer Hintergrundbeleuchtung 2, hier dargestellt für die Betriebsart B1 für einen freien Sichtmodus. Entsprechend zeigt Fig.9 eine Prinzipskizze der Hintergrundbeleuchtung 2 aus Fig. 7 für die Betriebsart B2 für einen eingeschränkten Sichtmodus.

Eine solche Hintergrundbeleuchtung 2 besteht beispielsweise aus einem flächigen Strahler 2a, der vorzugsweise als Lichtleiter mit seitlich angeordneten Leuchtmitteln 2b ausgebildet ist, mindestens einem in den flächigen Strahler 2a integrierten und/oder davor angeordneten Lichtkollimator 2c - z.B. zwei gekreuzten BEF-Folien, zwei gekreuzten "Optical Lighting Films" (OLF) Typ 2301 von 3M™, und/oder einem oder mehreren Privacy-Filtern, z.B. Vikuiti von 3M™ - , einem in Betrachtungsrichtung vor dem Lichtkollimator 2c angeordneten plattenförmigen, transparenten Lichtleiter 2d, welcher aus einem transparenten, thermoplastischen oder thermoelastischen Kunststoff und darin verteilten Streupartikeln besteht, sowie Leuchtmitteln 2e, die seitlich an Schmalseiten des Lichtleiters 2d angeordnet sind.

In der in Fig.8 dargestellten Betriebsart B1 für einen freien Sichtbereich sind mindestens die Leuchtmittel 2e, und hier im Beispiel auch der flächige Strahler 2a eingeschaltet, d.h. wenn der flächige Strahler 2a als Lichtleiter ausgebildet ist, werden selbstredend die Leuchtmittel 2b des flächigen Strahlers 2a eingeschaltet.

In der in Fig.9 dargestellten Betriebsart B2 für einen eingeschränkten Sichtbereich sind die Leuchtmittel 2e aus- und der flächige Strahler 2a eingeschaltet, d.h. wenn der flächige Strahler 2a als Lichtleiter ausgebildet ist, werden ebenso die Leuchtmittel 2b eingeschaltet.

Für den Lichtleiter 2d gelten die weiter oben genannten Ausgestaltungsmöglichkeiten zum Lichtleiter 3 analog. Die dicken Pfeile an den Leuchtmitteln 2b und 2e sowie 4 in den Fig.3, Fig.8 und Fig.9 indizieren, dass diese eingeschaltet sind. Bei den Leuchtmitteln 2b, 2e, 4 handelt es sich bevorzugt um (kalt-)weiß leuchtende LED-Zeilen.

Vorteilhaft werden als Streupartikel in den transparenten Lichtleitern 2d, 3 und ggf. auch 2b Titandioxid-Partikel einer mittleren Partikelgröße von 150 - 500 nm in einer Konzentration bezogen auf das Gewicht des jeweiligen Lichtleiters von 0.01 - 300 Gew.-ppm eingesetzt.

Es ist auch möglich, dass die transparenten Lichtleiter 2d, 3 und ggf. auch 2b jeweils aus einem Matrixkunststoff A und darin verteilten Streupartikeln aus einem Polymerisat B bestehen, wobei der Anteil der Streupartikel bestehend aus Polymerisat B jeweils 0,01 bis 3 Gewichtsprozent bezogen auf den Matrixkunststoff A beträgt, und die Brechzahl nD(B) des Polymerisats B um mindestens 0,002 Einheiten über der Brechzahl nD(A) des Matrixkunststoffs A liegt.

In einer vorteilhaften Ausführung sind auf der Oberseite des Bildgebers 5 und/oder auf mindestens einer der Großflächen des Lichtleiters 3 Mittel zur Reflexminderung, etwa eine Antiglare- und/oder ein Antireflexbeschichtung, angeordnet. Insbesondere eine Antiglarebeschichtung dient im Zusammenhang mit der Erfindung nicht allein der Verminderung von direkten Reflexen externer Lichtspots, sondern erlaubt vielmehr auch die gestreute Rückreflexion des zum Bildgeber 5 hin vom Lichtleiter 3 abgestrahlten Lichts.

Eine vorstehend beschriebene, flächenartig ausgedehnte Hintergrundbeleuchtung 2 strahlt in den meisten bekannten Ausgestaltungen in der Betriebsart B2 für einen eingeschränkten Sichtmodus Licht zwar in einen eingeschränkten Winkelbereich ab, jedoch ist diese Richtungsselektion bei weitem nicht vollständig, was dazu führt, das man auf einem transmissiven Bildgeber 5 vor einer solchen Hintergrundbeleuchtung selbst aus Schrägsicht immer noch den Bildinhalt vollständig oder zu großen Teilen erkennen kann, wenn auch mit schwacher Helligkeit und/oder mit schwachem Hell-Dunkel-Kontrast. Diese immer noch mögliche Schrägsicht wird auf Grund der Erfindung vollständig oder nahezu vollständig eliminiert:
Im Falle der zweiten Ausgestaltungen gemäß Fig. 5 und Fig. 6 sind in der Betriebsart B2 die Leuchtmittel 4 eingeschaltet, daher wird das von der Hintergrundbeleuchtung 2 in einen eingeschränkten Winkelbereich abgestrahlte und sodann durch den transmissiven Bildgeber 5 hindurchdringende Licht von Licht überlagert, welches der Bildgeber 5 auf Grund der Einstrahlung von Licht aus den Leuchtmitteln 4 diffus und/oder gerichtet in den Betrachtungsraum zurückstreut bzw. -reflektiert, wodurch die Restsichtbarkeit eines auf dem transmissiven Bildgeber 5 dargestellten Bildes außerhalb des besagten eingeschränkten Winkelbereiches verringert wird, bzw. in anderen Ausgestaltungen wird das von der Hintergrundbeleuchtung 2 in einen eingeschränkten Winkelbereich abgestrahlte und sodann durch den transmissiven Bildgeber 5 hindurchdringende Licht von Licht überlagert, welches der Bildgeber 5 auf Grund der Einstrahlung von Licht aus dem Lichtleiter 3 diffus und/oder gerichtet in den Betrachtungsraum zurückstreut bzw. -reflektiert und/oder welches vom Lichtleiter 3 in den Betrachtungsraum abgestrahlt wird, so dass die Restsichtbarkeit eines auf dem transmissiven Bildgeber 5 dargestellten Bildes außerhalb des besagten eingeschränkten Winkelbereiches verringert wird.

Im Falle der ersten Ausgestaltungen gemäß Fig. 3 und Fig. 4 wird durch die Überlagerung des von der Hintergrundbeleuchtung 2 in einen eingeschränkten Winkelbereich abgestrahlten und sodann durch den transmissiven Bildgeber 5 hindurchdringenden Lichts mit - ggf. farbigem - Licht, welches der Lichtleiter 3 flächig über einen großen Winkelbereich abstrahlt, die Restsichtbarkeit eines auf dem transmissiven Bildgeber 5 dargestellten Bildes außerhalb des besagten eingeschränkten Winkelbereiches massiv verringert.

Dieser Sachverhalt ist des besseren Verständnisses halber mittels Messwerten in den Fig.10 und Fig.11 visualisiert. So zeigt Fig.10 einen Graphen für die Sichtverhältnisse beim Blick auf einen beispielhaften Bildschirm in der Betriebsart B2, und Fig.11 einen Graphen für die Sichtverhältnisse beim Blick auf einen Bildschirm in der Betriebsart B1.

In beiden Darstellungen ist auf der Abszisse der Einblickwinkel, gemessen von der Bildschirmmitte und relativ zur Mittelsenkrechten, dargestellt, während die Ordinate einen relativen - und daher einheitslosen - Helligkeitswert für die Leuchtdichte wiedergibt. Ebenso für beide Darstellungen gilt, dass die gestrichelte Messkurve die Messung für eine weiße Fläche in der Bildschirmmitte wiedergibt, während die durchgezogene Messkurve die Messung für eine schwarze Fläche in der Bildschirmmitte zeigt.

In Fig.10 ist klar zu erkennen, dass das in der Betriebsart B2 aus schrägen, durch die Winkeleinschränkung geblockten Einblickrichtungen von jenseits +/-30 Grad zur Mittelsenkrechten nach links und rechts wahrnehmbare Bild bei Ausgestaltung aller Leuchtmittel als weiße LEDs (oder LED-Zeilen) einer grauen oder weißen Fläche entspricht: Hier ist nämlich der Kontrast zwischen schwarz und weiß quasi aufgehoben, da das Licht, welches der Lichtleiter 3 aussendet, selbst einen schwarzen Bildinhalt sichtbar grau bzw. weiß überstrahlt. Bezüglich der Interpretation der Messkurve bedeutet dies: Der Unterschied für den Blick auf eine schwarze und eine weiße Fläche ist ab Einblickwinkeln jenseits von +/-30 Grad links und rechts gegenüber der Mittelsenkrechten in der Ausgestaltung dieses Messbeispiels quasi nicht mehr vorhanden; damit ist ein Bildinhalt nicht mehr erkennbar und der Sichtschutz für schräge Sicht ist aktiv. Gegenüber herkömmlichen Technologien wird der Sichtschutz in der Betriebsart B2 deutlich verbessert. Zwar wird in dieser Betriebsart auf Grund des vom Lichtleiter 3 ausgehenden Lichtes, welches das vom Bildgeber 5 ausgehende Licht, auf welches die Bildinformation aufmoduliert ist, überlagert, auch dessen Hell-Dunkel-Kontrast vermindert. Dieser ist jedoch immer noch groß genug, um ein deutliches, helles Bild aus Richtungen, die kleinen Winkeln um die Mittelsenkrechte herum entsprechen, beispielsweise kleiner als 20 Grad, zu erkennen.

Demgegenüber zeigt Fig. 11, dass das in der Betriebsart B1 auch aus schrägen Winkeln ein deutlicher Sichtkontrast erzielt werden kann, insbesondere weil keine Überlagerung mit Licht aus dem Lichtleiter 3 vorhanden ist, da dieser in dieser Betriebsart kein Licht aussendet und das durch den Bildgeber 5 hindurchdringende Licht quasi unbeeinflusst passieren lässt.

In Fig.12 ist eine Prinzipskizze zur Auskopplung von Licht, das seitlich von Leuchtmitteln 4 in ein optisches Element 3 - hier nur als kleiner Ausschnitt in Schnittdarstellung gezeigt - eingekoppelt wird, in einen größtmöglichen Raumwinkel, für eine nicht zur Erfindung gehörige vierte Ausgestaltung eines Bildschirms 1 dargestellt. Die kleinen Punkte stilisieren Streupartikel als Streuzentren für das Licht, welches seitlich von den Leuchtmitteln 4 eingekoppelt wird. Als Streupartikel für den Lichtleiter 3 werden hier bevorzugt Titandioxid-Partikel in einer Konzentration bezogen auf das Gewicht des Lichtleiters 3 von 0.1 - 50 Gew.-ppm, bevorzugt 0.1 - 10 Gew.-ppm., eingesetzt, und/oder die Titandioxidpartikel weisen eine mittlere Partikelgröße von 160 bis 450 nm und besonders bevorzugt von 170 bis 400 nm auf.

Auf Grund von Totalreflexion werden Strahlen des eingekoppelten Lichts an der Außenwand wieder zurück in den Lichtleiter 3 geworfen bis sie schließlich auf einen Streupartikel zur gewünschten Auskopplung treffen. Die Darstellung in Fig.1 ist zur besseren Erkennbarkeit stark stilisiert; in der Realität ist eine sehr große Vielzahl an Strahlengängen im Lichtleiter 3 umgesetzt. In Bezug auf den Durchgang von Licht aus einer Hintergrundbeleuchtung 2 durch den Lichtleiter 3 wird analog auf Fig. 2 verwiesen. Die Streupartikel spielen dabei eine vernachlässigbare Rolle, da das Licht gerichtet aus der Hintergrundbeleuchtung 2 herrührt und nicht bzw. kaum durch Totalreflexion im Lichtleiter hin und her gelenkt wird.

Fig.13 gibt eine Prinzipskizze eines Bildschirms 1 gemäß der nicht zur Erfindung gehörigen vierten Ausgestaltung in einer ersten Betriebsart B1 für einen freien Sichtmodus wieder, bei der ein größtmöglicher Raumwinkel ausgeleuchtet wird, wobei der Bildschirm 1 zusammen mit einem Bildgeber 5 verwendet wird, und wobei die Hintergrundbeleuchtung 2 ausgeschaltet ist. Fig.14 zeigt eine nicht zur Erfindung gehörige Abwandlung davon, wobei hier die Hintergrundbeleuchtung 2 eingeschaltet ist, die schwarzen Pfeile zeigen das von der Hintergrundbeleuchtung 2 herrührende Licht. Fig.16 wiederum zeigt eine Prinzipskizze einer nicht zur Erfindung gehörigen fünften Ausgestaltung in Abwandlung der Variante gemäß Fig.14, bei welcher eine teilweise Reflexion auf der Oberfläche der Hintergrundbeleuchtung 2 zu einer Art Lichtrecycling für das Licht führt, welches nach unten hin aus der Großfläche des Lichtleiters 3 austritt, gekennzeichnet durch die gestrichelten Pfeile. Damit wird die Lichtausbeute verbessert. Schließlich zeigt Fig.15 eine Prinzipskizze der vierten Ausgestaltung des Bildschirms 1 in einer zweiten Betriebsart B2 für einen eingeschränkten Sichtmodus, bei der ein eingeschränkter Raumwinkel ausgeleuchtet wird, wobei auch hier der Bildschirm 1 zusammen mit einem Bildgeber 5 verwendet wird.

Der in den Zeichnungen Fig.13 bis Fig.16 schematisch dargestellte nicht zur Erfindung gehörige Bildschirm 1, der in mindestens zwei Betriebsarten B1 für einen freien Sichtmodus und B2 für einen eingeschränkten Sichtmodus betrieben wird, umfasst dabei zunächst eine flächenartig ausgedehnte Hintergrundbeleuchtung 2, die in der Betriebsart B1 für einen freien Sichtmodus Licht in einen nicht eingeschränkten Winkelbereich abstrahlt, und die in der Betriebsart B2 für einen eingeschränkten Sichtmodus Licht in einen eingeschränkten Winkelbereich abstrahlt, wobei das von der Hintergrundbeleuchtung 2 ausgehende Licht in mindestens einer Richtung, die in einem Winkel größer als 45 Grad zur Flächennormale der Hintergrundbeleuchtung 2 gelegen ist, mit höchstens 6% der maximalen Lichtstärke abgestrahlt wird. Des Weiteren umfasst der Bildschirm 1 einen in Betrachtungsrichtung vor der Hintergrundbeleuchtung 2 angeordneten transmissiven Bildgeber 5, mindestens einen in Betrachtungsrichtung vor der Hintergrundbeleuchtung 2 gelegenen, plattenförmigen und Lichtleiter 3, welcher aus einem thermoplastischen oder thermoelastischen Kunststoff mit darin homogen verteilten Streupartikeln besteht oder an mindestens einer der Großflächen Auskoppelelemente aufweist, sowie Leuchtmittel 4, die seitlich an Schmalseiten des Lichtleiters 3 angeordnet sind.

Sind im Lichtleiter 3 Streupartikel vorhanden, so bestehen diese aus Titandioxid, Bariumsulfat, silsesquioxanen Partikeln und/oder vernetzten Polystyrol-Partikeln mit einer mittleren Partikelgröße von 150 - 500 nm, welche in einer Konzentration bezogen auf das Gewicht des Lichtleiters 3 von 0.01 - 300 Gew.-ppm eingesetzt werden. Der Lichtleiter 3 weist in diesem Fall weder eine Bedruckung, noch lichtstreuende Störstellen auf. Im Falle der Auskoppelelemente können diese allerdings auf die Oberfläche beispielsweise durch Ätzen eingebracht werden.

In beiden Fällen - Streupartikel und Auskoppelelemente - ist der Lichtleiter für das von der Hintergrundbeleuchtung 2 ausgehende Licht zu mindestens 85% transparent. In der Betriebsart B1 wird dann das aus den Leuchtmitteln 4 seitlich in den Lichtleiter 3 einfallende Licht für einen freien Sichtbereich in Richtungen, die in Winkeln zwischen 45 Grad und 75 Grad zur Flächennormale der Hintergrundbeleuchtung 2 gelegen sind, mit mindestens 12% der maximalen Lichtstärke des aus dem Lichtleiter 3 senkrecht zur Oberfläche austretenden Lichtes abgestrahlt. Das aus dem Lichtleiter 3 an mindestens einem Punkt seiner Oberfläche austretende Licht, welches von den Leuchtmitteln 4 herrührt, wenn diese eingeschaltet sind, weist dann in mindestens einem Winkel α zur Oberfläche des Lichtleiters, mit a<80 Grad, eine höhere Lichtstärke auf als das an dem besagten Punkt der Oberfläche des Lichtleiters senkrecht zur Oberfläche des Lichtleiters austretende Licht. Dabei sind in der Betriebsart B2 die Hintergrundbeleuchtung 2 ein- und die Leuchtmittel 4 ausgeschaltet und in der Betriebsart B1 mindestens die Leuchtmittel 4 eingeschaltet.

Der Lichtleiter 3 weist im Falle der Verwendung von Streupartikeln keine Bedruckung und keine lichtstreuenden Störstellen auf und ist für das von der Hintergrundbeleuchtung 2 ausgehende Licht zu mindestens 85% transparent. Gäbe es eine Bedruckung und/oder lichtstreuende Störstellen auf mindestens einer der beiden Großflächen des Lichtleiters 3, so würde in der Betriebsart B2 das von der Hintergrundbeleuchtung 2 herrührende und durch den Lichtleiter 3 hindurchtretende Licht dadurch gestreut und somit nicht mehr nur zu einem eingeschränkten Winkelbereich abgestrahlt.

Für die Betriebsart B1 ist es unbedingt erforderlich, dass die Leuchtmittel 4 eingeschaltet sind, während die Hintergrundbeleuchtung 2 ein- oder ausgeschaltet sein kann. Ist die Hintergrundbeleuchtung 2 dabei ausgeschaltet, sorgt nur das Licht aus den Leuchtmitteln 4 für die im Winkel nicht eingeschränkte Beleuchtung. Sind hingegen für die Betriebsart B1 sowohl die Leuchtmittel 4 als auch die Hintergrundbeleuchtung 2 eingeschaltet, kann eine größere Helligkeit erzielt werden. Dabei ist es dann besonders vorteilhaft, dass das aus dem Lichtleiter 3 an mindestens einem Punkt seiner Oberfläche austretende Licht, welches von den Leuchtmitteln 4 herrührt, wenn diese eingeschaltet sind, in mindestens einem Winkel α zur Oberfläche des Lichtleiters 3, mit a<80 Grad, eine höhere Lichtstärke aufweist, als das an dem besagten Punkt der Oberfläche des Lichtleiters 3 senkrecht zur Oberfläche des Lichtleiters 3 austretende Licht, wie dies in Fig.17 angedeutet ist. Der mit "I" beschriftete Pfeil steht für die jeweilige Lichtstärke, die horizontal zum Lichtleiter 3 in dem jeweiligen Winkel α abgestrahlt wird. Diese technische Umsetzung bedeutet nämlich, dass sich das Licht, welches aus den Leuchtmitteln 4 herrührt und seine stärkste Helligkeit nicht in etwa entlang der Mittelsenkrechten des Bildschirms 1 aufweist mit dem Licht, das von der Hintergrundbeleuchtung 2 herrührt und seine stärkste Helligkeit in etwa entlang der Mittelsenkrechten des Bildschirms 1 aufweist, sehr gut ergänzt, um über mindestens einen Halbwinkel hinweg - z.B. das Winkelspektrum der Horizontalen vor dem Bildschirm 1 - eine homogenere und insgesamt hellere Ausleuchtung zu erreichen, als wenn nur die Leuchtmittel 4 für die Betriebsart B1 eingeschaltet wären.

Als Streupartikel für den Lichtleiter 3 werden bevorzugt Titandioxid-Partikel in einer Konzentration bezogen auf das Gewicht des Lichtleiters 3 von 0.1 - 50 Gew.-ppm, bevorzugt 0.1 - 10 Gew.-ppm., eingesetzt, und/oder die Titandioxidpartikel weisen eine mittlere Partikelgröße von 160 bis 450 nm und besonders bevorzugt von 170 bis 400 nm auf.

Ferner gilt, dass der Lichtleiter 3 einen Haze-Wert kleiner als 7% aufweist, bevorzugt kleiner als 2%, gemessen gemäß ASTM D1003.

Es ist weiterhin vorteilhaft, wenn der Lichtleiter 3 mindestens 40 Gewichtsprozent Polymethylmethacrylat, bevorzugt mindestens 60 Gewichtsprozent Polymethylmethacrylat, bezogen auf sein Gewicht, umfasst.

Eine weitere nicht zur Erfindung gehörige Ausgestaltung des Bildschirms 1 sieht vor, dass für die Betriebsart B2 das ausschließlich von der Hintergrundbeleuchtung 2 herrührende und aus dem Lichtleiter 3 an jedem Punkt seiner Oberfläche in Betrachtungsrichtung austretende Licht in Winkeln β >30 Grad -bzgl. der Winkeldefinition von β siehe auch Fig.15 -, gemessen senkrecht zur Oberfläche des Lichtleiters 3 und in horizontaler Orientierung zur Oberfläche des Lichtleiters 3, maximal 5% von der Lichtstärke aufweist, die das Licht aufweist, welches von einem solchen Punkt der Oberfläche des Lichtleiters 3 senkrecht zu seiner Oberfläche austritt. Besonders bevorzugt enthält die Hintergrundbeleuchtung 2 dazu mindestens eine optische Schicht zur Kollimation von Licht, um eine winkeleingeschränkte Abstrahlcharakteristik des von ihr ausgestrahlten Lichtes zu erzielen.

Bei der Hintergrundbeleuchtung 2 handelt es sich vorzugsweise um ein Backlight, beispielsweise ein Side-light, Edgelight, Direct LED Backlight, edge LED Backlight, OLED oder einen anderen Flächenstrahler, auf welches ein permanenter Sichtschutzfilter, auch als Privacy-Filter (z.B. Vikuiti™ von 3M™ oder LCF von Shin Etsu™) bezeichnet, aufgebracht ist, welcher als Lichtkollimator bzw. räumlicher Lichtfilter wirkt, nach dessen Durchgang das Licht von der Hintergrundbeleuchtung 2 im Wesentlichen nur noch in einen eingeschränkten Winkelbereich abgestrahlt wird. Zusätzlich zu der mindestens einen Schicht zur Kollimation können noch im Winkel vom 90 Grad gekreuzte Komponenten vom Typ "Optical Lighting Film" (OLF) Typ 2301 von 3M™ vorhanden sein, um eine Vor-Kollimation zu erzielen und dabei das Licht zu bündeln.

Weiterhin ist es möglich, dass die nächste optische Komponente unterhalb des Lichtleiters 3 mindestens eine teilweise reflektierende Oberfläche für in der Betriebsart B1 aus dem Lichtleiter 3 nach unten austretendes Licht aufweist und dadurch derartig nach unten abgestrahltes Licht wenigstens teilweise wieder auf den Lichtleiter 3 zurückreflektiert wird und zumindest teilweise durch diesen hindurch tritt, wie das in Fig. 4 mit den gestrichelten Pfeilen angedeutet ist. Da der Lichtleiter 3 Licht von beiden Großflächen aus, also nach oben und nach unten abstrahlt (die Richtung nach unten weist in Richtung der Hintergrundbeleuchtung 2), wird auf diese Weise eine Art Lichtrecycling ermöglicht. Hier kann es ausreichen, dass die besagte nächste optische Komponente, oftmals also die optische Schicht der Hintergrundbeleuchtung 2 zur Kollimation (z.B. Privacy-Filter), nicht entspiegelt ist oder aber eine Teilverspiegelung aufweist, die für von unten, d.h. von der Hintergrundbeleuchtung 2, kommendes Licht so transparent wie möglich ist.

Bei den Leuchtmitteln 4 handelt es sich z.B. um LEDs. Außerdem ist es sinnvoll, wenn die Lichteinkopplung aus den seitlich angeordneten Leuchtmitteln 4 in den Lichtleiter 3 von mindestens zwei Seiten, bevorzugt von gegenüberliegenden Seiten, erfolgt.

Vor dem Lichtleiter 3 ist ein transmissiver Bildgeber 5, beispielsweise ein LCD-Panel, angeordnet, wie in den Zeichnungen Fig.13 bis Fig.16 eingezeichnet. Damit können die beiden Betriebsarten B1 und B2 entsprechend für den Bildgeber 5 umgesetzt werden. Die erste Betriebsart B1 für einen freien Sichtbereich erlaubt dann auf dem Bildgeber 5 ein Bild aus einem möglichst großen Raumwinkel in voller Auflösung wahrzunehmen. Umgekehrt verhält es sich in der zweiten Betriebsart B2 für einen eingeschränkten Sichtbereich so, dass das Bild auf dem Bildgeber 5 ebenso in voller Auflösung, jedoch nur aus einem eingeschränkten Raumwinkel wahrnehmbar ist, was einem privaten Betrachtungsmodus entspricht (sogenannter Sichtschutz- oder Privacy-Modus). Je nach Ausgestaltung der Parameter für die Beleuchtungswinkel ist dann auch der sichtbare Bereich des von dem Bildgeber 5 dargestellten Bildes entsprechend im Raumwinkel eingeschränkt wahrnehmbar.

Überdies ist eine Teilverspiegelung auf der Rückseite des transmissiven Bildgebers 5 zur weiteren Homogenisierung der Lichtausbeute aus dem Lichtleiter 3 vorteilhaft. Auch diese kann zum Ausgleich von Helligkeitsunterschieden analog zur Teilverspiegelung auf dem Lichtleiter 3 variierend ausgestaltet oder nur bereichsweise aufgebracht sein.

Von Vorteil ist ebenso ein bereits vom Design her kollimiertes Backlight - ein sogenanntes "Directional Backlight" - als Hintergrundbeleuchtung 2, d.h. die Lichtquelle ist hierbei so konzipiert, dass ihr Licht nur in einen vorbeschriebenen, eingeschränkten Winkelbereich abgestrahlt wird. Weiterhin kann es günstig sein, wenn stets die gleichen Lichtquellen, z.B. die seitlich angeordneten Leuchtmittel 4, für beide Betriebsarten verwendet werden. Das Licht wird dann für die Umschaltung zwischen den beiden Betriebsarten B1 und B2 beispielsweise über einen optoelektronischen und/oder optomechanischen Schalter einmal in den Lichtleiter 3 und/oder einmal in die Hintergrundbeleuchtung 2 eingekoppelt. Als Schalter kommt hier z.B. ein Shutter oder eine mechanische Umschaltung wie ein kippbarer Spiegel in Frage. Auch können die Leuchtmittel 4 zweizeilig ausgebildet sein, wobei dann jeweils nur die gewünschte bzw. entsprechende Zeile angeschaltet wird.

Weiterhin können die gewünschten bzw. die erlaubten Abstrahlungsrichtungen für den Modus B2 für eine eingeschränkte Sicht jeweils für die horizontale und vertikale Richtung unabhängig voneinander definiert und umgesetzt werden. Beispielsweise kann in der vertikalen Richtung ein größerer Winkel sinnvoll sein als in der horizontalen Richtung, etwa wenn bei Geldautomaten Personen mit unterschiedlicher Größe etwas sehen sollen, während der Seiteneinblick stark eingeschränkt bleiben soll. Dies wird insbesondere durch die Wahl der Licht kollimierenden Schichten, z.B. der Privacy-Filter, erreicht.

Die vorstehend beschriebenen Ausgestaltungen von Bildschirmen 1 erlauben praktisch gut umsetzbare Lösungen, um eine sichere Darstellung von Informationen durch einen wahlweise eingeschränkten Betrachtungswinkel zu realisieren, während in einer weiteren Betriebsart eine freie, möglichst im Betrachtungswinkel uneingeschränkte Sicht möglich ist. Der Bildschirm 1 ist mit einfachen Mitteln preisgünstig realisierbar. In beiden Betriebsarten B1 und B2 ist die native Auflösung des verwendeten Bildgebers 5 nutzbar. Außerdem wird ein Lichtverlust gering gehalten bzw. je nach Ausgestaltung sogar vermieden.

Der vorangehend beschriebene Bildschirm 1 mit transmissivem Bildgeber 5 kann vorteilhaft überall da angewendet werden, wo vertrauliche Daten angezeigt und/oder eingegeben werden, wie etwa bei der PIN-Eingabe oder zur Datenanzeige an Geldautomaten oder Zahlungsterminals sowie Mobilgeräten, oder zur Passworteingabe oder beim Lesen von E-Mails und SMS auf mobilen Geräten.

Im Gegensatz zu Ausgestaltungen im Stand der Technik, bei denen in der Regel noch eine Restsichtbarkeit auch aus schrägen Winkeln vorhanden ist, erlaubt die Erfindung je nach Ausgestaltung das vollständige Auslöschen der Restsichtbarkeit aus geblockten Einblickwinkeln. Im Gegensatz zum Stand der Technik muss außerdem weder eine starke UV-Lichtquelle benutzt werden, noch müssen erst aufwändig winkeleingeschränkte Lichtverteilungen in uneingeschränkte Lichtverteilungen umgewandelt werden - was die Helligkeit massiv vermindert -, noch sind aufwändige Prismen- bzw. Mikrolinsenstrukturen notwendig.

### Bezugszeichenliste

- 1: Bildschirm
- 2: Hintergrundbeleuchtung
- 2a: flächiger Strahler
- 2b: Leuchtmittel
- 2c: Lichtkollimator
- 2d: plattenförmiger Lichtleiter
- 2e: Leuchtmittel
- 3: plattenförmiger Lichtleiter
- 4: Leuchtmittel
- 5: Bildgeber

- B1: Betriebsart für einen freien Sichtmodus
- B2: Betriebsart für einen eingeschränkten Sichtmodus

## Patentansprüche

1. Bildschirm (1), der in mindestens zwei Betriebsarten B1 für einen freien Sichtmodus und B2 für einen eingeschränkten Sichtmodus betrieben werden kann, umfassend
- eine flächenartig ausgedehnte Hintergrundbeleuchtung (2), die in der Betriebsart B1 für einen freien Sichtmodus Licht in einen nicht eingeschränkten Winkelbereich abstrahlt, und die in der Betriebsart B2 für einen eingeschränkten Sichtmodus Licht in einen eingeschränkten Winkelbereich abstrahlt,
- einen in Betrachtungsrichtung vor der Hintergrundbeleuchtung (2) angeordneten transmissiven Bildgeber (5),
- Leuchtmittel (4), die in Betrachtungsrichtung außerhalb des aktiven Bildwiedergabebereichs des Bildgebers (5) und gleichzeitig in einem Abstand von mindestens 1 Millimeter oberhalb des Bildgebers (5) angeordnet sind, und / oder
- einen in Betrachtungsrichtung vor dem Bildgeber (5) gelegenen, plattenförmigen Lichtleiter (3), welcher aus einem transparenten, thermoplastischen oder thermoelastischen Kunststoff und darin verteilten Streupartikeln besteht und/oder an mindestens einer der Großflächen Auskoppelelemente aufweist, wobei seitlich an Schmalseiten des Lichtleiters (3) Leuchtmittel (4) angeordnet sind,
- wobei in der Betriebsart B1 die Leuchtmittel (4) ausgeschaltet sind, so dass das von der Hintergrundbeleuchtung (2) ausgehende und sodann durch den transmissiven Bildgeber (5) hindurchdringende Licht unbeeinflusst von den Leuchtmitteln (4) bleibt, bzw. bei Vorhandensein eines Lichtleiters (3) im Wesentlichen unbeeinflusst durch den Lichtleiter (3) hindurchtritt, und
- wobei in der Betriebsart B2 die Leuchtmittel (4) eingeschaltet sind, so dass das von der Hintergrundbeleuchtung (2) in einen eingeschränkten Winkelbereich abgestrahlte und sodann durch den transmissiven Bildgeber (5) hindurchdringende Licht von Licht überlagert wird, welches der Bildgeber (5) aufgrund der Einstrahlung von Licht aus den Leuchtmitteln (4) diffus und/oder gerichtet in den Betrachtungsraum zurückstreut bzw. -reflektiert, bzw. welches bei Vorhandensein eines Lichtleiters (3) aufgrund der Einstrahlung von Licht aus dem Lichtleiter (3) diffus und/oder gerichtet in den Betrachtungsraum zurückstreut bzw. -reflektiert wird und/oder von diesem flächig über einen großen Winkelbereich in den Betrachtungsraum abgestrahlt wird,
- wodurch die Restsichtbarkeit eines auf dem transmissiven Bildgeber (5) dargestellten Bildes außerhalb des besagten eingeschränkten Winkelbereiches verringert wird.

2. Bildschirm (1) nach Anspruch 1, **dadurch gekennzeichnet, dass** die Hintergrundbeleuchtung (2) besteht aus
- einem flächigen Strahler (2a), vorzugsweise einem Lichtleiter mit seitlich angeordneten Leuchtmitteln (2b),
- mindestens einem in den flächigen Strahler (2a) integrierten und/oder davor angeordneten Lichtkollimator (2c),
- einem in Betrachtungsrichtung vor dem Lichtkollimator (2c) angeordneten plattenförmigen, transparenten Lichtleiter (2d), welcher aus einem transparenten, thermoplastischen oder thermoelastischen Kunststoff und darin verteilten Streupartikeln besteht und/oder an mindestens einer der Großflächen Auskoppelelemente aufweist, sowie
- Leuchtmitteln (2e), die seitlich an Schmalseiten des Lichtleiters (2d) angeordnet sind,
- wobei in der Betriebsart B1 für einen freien Sichtbereich mindestens die Leuchtmittel (2e), und wahlweise auch der flächige Strahler (2a) eingeschaltet sind, und
- wobei in der Betriebsart B2 für einen eingeschränkten Sichtbereich die Leuchtmittel (2e) aus- und der flächige Strahler (2a) eingeschaltet sind.

3. Bildschirm (1) nach einem der vorgenannten Ansprüche, **dadurch gekennzeichnet, dass** als Streupartikel in den transparenten Lichtleitern (2d, 3) Titandioxid-Partikel einer mittleren Partikelgröße von 150 - 500 nm in einer Konzentration bezogen auf das Gewicht des jeweiligen Lichtleiters von 0.01 - 300 Gew.-ppm eingesetzt werden.

4. Bildschirm (1) nach einem der Ansprüche 1 oder 2, **dadurch gekennzeichnet, dass** die transparenten Lichtleiter (2d, 3) jeweils aus einem Matrixkunststoff A und darin verteilten Streupartikeln aus einem Polymerisat B bestehen, wobei der Anteil der Streupartikel bestehend aus Polymerisat B jeweils 0,01 bis 3 Gewichtsprozent bezogen auf den Matrixkunststoff A beträgt, und die Brechzahl nD(B) des Polymerisats B um mindestens 0,01 Einheiten über der Brechzahl nD(A) des Matrixkunststoffs A liegt.

5. Bildschirm (1) nach einem der vorgenannten Ansprüche, **dadurch gekennzeichnet, dass** auf der Oberseite des Bildgebers (5) und/oder auf mindestens einer der Großflächen des Lichtleiters (3) Mittel zur Reflexminderung, beispielsweise eine Antiglare- und/oder ein Antireflexbeschichtung, angeordnet sind.

6. Bildschirm (1) nach einem der vorgenannten Ansprüche, **dadurch gekennzeichnet, dass** mindestens die Leuchtmittel (2e, 4) LEDs oder Laserdioden sind.

7. Bildschirm (1) nach einem der vorgenannten Ansprüche, **dadurch gekennzeichnet, dass** die Leuchtmittel (4) zur Abstrahlung farbigen Lichts ausgebildet sind.

8. Bildschirm (1) nach einem der Ansprüche 1 bis 5, **dadurch gekennzeichnet, dass** die Leuchtmittel (4) Licht in einer Farbe abstrahlen, welche im von dem transmissiven Bildgeber (5) dargestellten Bild (6) nicht vorkommt.

9. Bildschirm (1) nach einem der Ansprüche 1 bis 5, **dadurch gekennzeichnet, dass** die Leuchtmittel (4) Licht in einer Farbe abstrahlen, welche im von dem transmissiven Bildgeber (5) dargestellten Bild (6) vorkommt bzw. im Farbspektrum nahe an einer solchen Farbe liegt.

10. Bildschirm (1) nach einem der Ansprüche 1 bis 5, **dadurch gekennzeichnet, dass** die Leuchtmittel (4) Licht in einer Farbe abstrahlen, die in etwa der Komplementärfarbe einer Farbe, welche im von dem transmissiven Bildgeber (5) dargestellten Bild (6) vorkommt, entspricht.

11. Bildschirm (1) nach einem der Ansprüche 1 bis 5, **dadurch gekennzeichnet, dass** die nächste optische Komponente unterhalb des Lichtleiters (3) mindestens eine teilweise reflektierende Oberfläche für in der Betriebsart B1 aus dem Lichtleiter (3) nach unten austretendes Licht aufweist und dadurch derartig nach unten abgestrahltes Licht wenigstens teilweise wieder auf den Lichtleiter (3) zurückreflektiert wird und zumindest teilweise durch diesen hindurch tritt.

12. Bildschirm (1) nach Anspruch 1 oder 7, **dadurch gekennzeichnet, dass** die Hintergrundbeleuchtung (2) mindestens eine optische Schicht zur Kollimation von Licht enthält.

13. Bildschirm (1) nach einem der Ansprüche 1 bis 8, **dadurch gekennzeichnet, dass** die Hintergrundbeleuchtung (2) ein Backlight, beispielsweise ein Side-light, Edgelight, Direct LED Backlight, edge LED Backlight, OLED oder ein anderer Flächenstrahler, ist, auf welches mindestens ein permanenter Privacy-Filter aufgebracht ist.

14. Verwendung eines Bildschirms (1) nach einem der Ansprüche 1 bis 13 zur Eingabe oder Anzeige von vertraulichen Daten, beispielweise von PIN-Geheimnummern, E-Mails, SMS oder Passwörtern, an Geldautomaten, Zahlungsterminals oder mobilen Geräten.

## Claims

1. A screen (1) that can be operated in at least two operating modes, viz B1 for a free viewing mode and B2 for a restricted viewing mode, comprising
- a backlight (2) extended in a planar manner that, in operating mode B1 for a free viewing mode, emits light into an unrestricted angular range, and, in operating mode B2 for a restricted viewing mode, emits light in a restricted angular range,
- a transmissive imager (5) arranged in front of the backlight (2) as seen in the viewing direction,
- light sources (4) that are arranged outside the active image display area of the imager (5), and at the same time at a distance of at least 1 millimeter above the imager (5), as seen in the viewing direction, and / or
- a plate-shaped light guide (3) located in front of the imager (5) as seen in the viewing direction, consisting of a transparent thermoplastic or thermoelastic material and scattering particles distributed therein, and/or having outcoupling elements on at least one of its faces, with light sources (4) being arranged laterally at the edges of the light guide (3),
- wherein, in operating mode B1, the light sources (4) are switched off, so that the light originating from the backlight (2) and then passing the transmissive imager (5) remains uninfluenced by the light sources (4) or, if a light guide (3) is provided, passes the light guide (3) essentially uninfluenced, and
- wherein, in operating mode B2, the light sources (4) are switched on, so that the light radiated by the backlight (2) into a restricted angular range and then passing the transmissive imager (5) is superimposed on by light that the imager (5) scatters or reflects back into the viewing space in a diffuse and/or specular manner due to the irradiation of light from the light sources (4), or that, if a light guide (3) is provided, is scattered or reflected back into the viewing space in a diffuse and/or specular manner due to the irradiation of light from the light guide (3) and/or is radiated into the viewing space by the light guide (3) in a planar manner over a wide angular range,
- whereby, outside the said restricted angular range, the residual visibility of an image displayed on the transmissive imager (5) is diminished.

2. The screen (1) as claimed in Claim 1, **characterized in that** the backlight (2) consists of
- a surface emitter (2a), preferably a light guide with laterally arranged light sources (2b),
- at least one light collimator (2c) integrated in the surface emitter (2a) and/or arranged in front of it,
- a plate-shaped, transparent light guide (2d) arranged in front of the light collimator (2c) as seen in the viewing direction, consisting of a transparent thermoplastic or thermoelastic material and scattering particles distributed therein, and/or having outcoupling elements on at least one of its faces, and
- light sources (2e) arranged laterally on edges of the light guide (2d),
- wherein, in operating mode B1 for a free viewing range, at least the light sources (2e), and, optionally, also the surface emitter (2a) are switched on, and
- wherein, in operating mode B2 for a restricted viewing range, the light sources (2e) are switched off and the surface emitter (2a) is switched on.

3. The screen (1) as claimed in any of the previous claims, **characterized in that** the scattering particles employed in the transparent light guides (2d, 3) are titanium dioxide particles of a mean particle size of 150 to 500 nm in a concentration of 0.01 to 300 wt.-ppm related to the weight of the respective light guide.

4. The screen (1) as claimed in any of Claims 1 or 2, **characterized in that** the transparent light guides (2d, 3) each consist of a matrix plastic A and, distributed therein, scattering particles of a polymerizate B, wherein the share of the scattering particles consisting of polymerizate B is 0.01 to 3 wt.-% related to the matrix plastic A, and wherein the refractive index nD(B) of the polymerizate B is higher than the refractive index nD(A) of the matrix plastic A by at least 0.01 units.

5. The screen (1) as claimed in any of the previous claims, **characterized in that** means for reflection reducing, e.g., an antiglare and/or antireflection coating, are arranged on the top surface of the imager (5) and/or on at least one of the faces of the light guide (3).

6. The screen (1) as claimed in any of the previous claims, **characterized in that** at least the light sources (2e, 4) are LEDs or Laser diodes.

7. The screen (1) as claimed in any of the previous claims, **characterized in that** the light sources (4) are adapted to emit colored light.

8. The screen (1) as claimed in any of Claims 1 through 5, **characterized in that** the light sources (4) emit light of a color that is not present in the image (6) displayed by the transmissive imager (5).

9. The screen (1) as claimed in any of Claims 1 through 5, **characterized in that** the light sources (4) emit light of a color that is present in the image (6) displayed by the transmissive imager (5) or is located close to such a color in the color spectrum.

10. The screen (1) as claimed in any of Claims 1 through 5, **characterized in that** the light sources (4) emit light of a color that approximately corresponds to a color that is complementary to a color present in the image (6) displayed by the transmissive imager (5).

11. The screen (1) as claimed in any one of Claims 1 through 5, **characterized in that** the nearest optical component below the light guide (3) has at least one partially reflecting surface for light exiting downwards from the light guide (3) in operating mode B1, and that, thereby, light radiated downward **in that** manner is at least partially reflected back onto the light guide (3) and at least partially passes it.

12. The screen (1) as claimed in Claim 1 or 7, **characterized in that** the backlight (2) includes at least one optical layer for collimating light.

13. The screen (1) as claimed in any of Claims 1 through 8, **characterized in that** the backlight (2) is a sidelight, edgelight, direct LED backlight, edge LED backlight, OLED or some other surface emitter, on which at least one permanent privacy filter is applied.

14. Using of a screen (1) as claimed in any of Claims 1 through 13 for the entry or display of confidential data, for example of PIN numbers, E-mails, SMS texts or passwords at ATMs, payment terminals or mobile devices.

## Revendications

1. Écran (1), qui peut être exploité dans au moins deux modes de fonctionnement, B1 pour un mode de vue sans restriction et B2 pour un mode de vue restreinte, comprenant
- un éclairage d'arrière-plan (2) étendu de manière plane, qui, dans le mode de fonctionnement B1 pour un mode de vue sans restriction, émet de la lumière dans une zone angulaire non restreinte, et qui, dans le mode de fonctionnement B2 pour un mode de vue restreinte, émet de la lumière dans une zone angulaire restreinte,
- un générateur d'image (5) transmissif disposé devant l'éclairage d'arrière-plan (2) dans le sens d'observation,
- des moyens d'éclairage (4), qui sont disposés, dans le sens d'observation, en dehors de la zone de reproduction d'image active du générateur d'image (5) et en même temps à une distance d'au moins 1 millimètre au-dessus du générateur d'image (5), et/ou
- un conducteur optique (3) en forme de plaque situé devant le générateur d'image (5) dans le sens d'observation, qui est constitué d'une matière synthétique transparente thermoplastique ou thermoélastique et de particules de diffusion réparties dans celle-ci et/ou présente sur au moins une des grandes surfaces des éléments d'extraction, des moyens d'éclairage (4) étant disposés latéralement sur des côtés étroits du conducteur optique (3),
- dans lequel, dans le mode de fonctionnement B1, les moyens d'éclairage (4) sont éteints, de sorte que la lumière sortant de l'éclairage d'arrière-plan (2) et passant ensuite à travers le générateur d'image (5) transmissif ne subit pas d'influence par les moyens d'éclairage (4), ou, en présence d'un conducteur optique (3), traverse le conducteur optique (3) essentiellement sans subir d'influence, et
- dans lequel, dans le mode de fonctionnement B2, les moyens d'éclairage (4) sont allumés, de sorte que de la lumière émise par l'éclairage d'arrière-plan (2) dans une zone angulaire restreinte et passant ensuite à travers le générateur d'image (5) transmissif est recouverte par de la lumière que le générateur d'image (5), en raison de l'émission de lumière par les moyens d'éclairage (4), rétrodiffuse ou réfléchit de manière diffuse et/ou directionnelle dans l'espace d'observation, ou qui, en présence d'un conducteur optique (3), en raison de l'émission de lumière par le conducteur optique (3), rétrodiffuse ou réfléchit de manière diffuse et/ou directionnelle dans l'espace d'observation et/ou est émise depuis celui-ci de manière plane sur une grande zone angulaire dans l'espace d'observation,
- moyennant quoi la visibilité résiduelle d'une image représentée sur le générateur d'image (5) transmissif est diminuée en dehors de ladite zone angulaire restreinte.

2. Écran (1) selon la revendication 1, **caractérisé en ce que** l'éclairage d'arrière-plan (2) est constitué de
- une lampe (2a) plane, de préférence un conducteur optique avec des moyens d'éclairage (2b) disposés latéralement,
- au moins un collimateur de lumière (2c) intégré dans la lampe (2a) plane et/ou disposé devant celle-ci,
- un conducteur optique (2d) transparent en forme de plaque disposé devant le collimateur de lumière (2c) dans le sens d'observation, qui est constitué d'une matière synthétique transparente thermoplastique ou thermoélastique et de particules de diffusion réparties dans celle-ci et/ou qui présente des éléments d'extraction sur au moins une des grandes surfaces, ainsi que
- des moyens d'éclairage (2e), qui sont disposés latéralement sur des côtés étroits du conducteur optique (2d),
- dans lequel, dans le mode de fonctionnement B1 pour une zone de vue sans restriction, au moins les moyens d'éclairage (2e) et au choix également la lampe (2a) plane sont allumés, et
- dans lequel, dans le mode de fonctionnement B2 pour une zone de vue restreinte, les moyens d'éclairage (2e) sont éteints et la lampe (2a) plane est allumée.

3. Écran (1) selon l'une des revendications précédentes, **caractérisé en ce que** des particules de dioxyde de titane d'une taille de particule moyenne de 150 à 500 nm dans une concentration de 0,01 à 300 ppm en poids par rapport au poids du conducteur optique respectif sont utilisées en guise de particules de diffusion dans les conducteurs optiques (2d, 3) transparents.

4. Écran (1) selon l'une des revendications 1 et 2, **caractérisé en ce que** les conducteurs optiques (2d, 3) transparents sont constitués respectivement d'une matière plastique de matrice A et de particules de diffusion en un produit de polymérisation B réparties dans celle-ci, la proportion des particules de diffusion constituées du produit de polymérisation B étant de respectivement 0,01 à 3 pour cent en poids par rapport à la matière plastique de matrice A, et l'indice de réfraction nD(B) du produit de polymérisation B est supérieur d'au moins 0,01 unité à l'indice de réfraction nD(A) de la matière plastique de matrice A.

5. Écran (1) selon l'une des revendications précédentes, **caractérisé en ce que** des moyens destinés à diminuer les reflets, par exemple un revêtement anti-éblouissement et/ou antireflet, sont disposés sur la face supérieure du générateur d'image (5) et/ou sur au moins une des grandes surfaces du conducteur optique (3).

6. Écran (1) selon l'une des revendications précédentes, **caractérisé en ce qu'**au moins les moyens d'éclairage (2e, 4) sont des DEL ou des diodes laser.

7. Écran (1) selon l'une des revendications précédentes, **caractérisé en ce que** les moyens d'éclairage (4) sont conçus pour émettre de la lumière en couleur.

8. Écran (1) selon l'une des revendications 1 à 5, **caractérisé en ce que** les moyens d'éclairage (4) émettent de la lumière dans une couleur qui n'est pas présente dans l'image (6) représentée par le générateur d'image (5) transmissif.

9. Écran (1) selon l'une des revendications 1 à 5, **caractérisé en ce que** les moyens d'éclairage (4) émettent de la lumière dans une couleur qui est présente dans l'image (6) représentée par le générateur d'image (5) transmissif ou qui se trouve proche d'une telle couleur dans le spectre des couleurs.

10. Écran (1) selon l'une des revendications 1 à 5, **caractérisé en ce que** les moyens d'éclairage (4) émettent de la lumière dans une couleur qui correspond approximativement à la couleur complémentaire d'une couleur qui est présente dans l'image (6) représentée par le générateur d'image (5) transmissif.

11. Écran (1) selon l'une des revendications 1 à 5, **caractérisé en ce que** le composant optique suivant sous le conducteur optique (3) présente au moins une surface en partie réfléchissante pour de la lumière sortant du conducteur optique (3) vers le bas dans le mode de fonctionnement B1 et de la lumière ainsi émise vers le bas à travers celui-ci est au moins partiellement de nouveau réfléchie sur le conducteur optique (3) et traverse au moins en partie celui-ci.

12. Écran (1) selon la revendication 1 ou 7, **caractérisé en ce que** l'éclairage d'arrière-plan (2) contient au moins une couche optique pour la collimation de la lumière.

13. Écran (1) selon l'une des revendications 1 à 8, **caractérisée en ce que** l'éclairage d'arrière-plan (2) est un rétroéclairage, par exemple un éclairage latéral, un éclairage périphérique, un rétroéclairage direct par DEL, un rétroéclairage périphérique par DEL, des DELO ou une autre lampe plane, sur lequel/laquelle au moins un filtre de confidentialité permanent est appliqué.

14. Utilisation d'un écran (1) selon l'une des revendications 1 à 13 pour la saisie ou l'affichage de données confidentielles, par exemple de numéros de code confidentiel PIN, de courriels, de SMS ou de mots de passe, sur des distributeurs automatiques, des terminaux de paiement ou des appareils mobiles.
